# EUROPEAN PATENT APPLICATION

(11) **EP 4 730 062 A1**
(43) Date of publication of application: **22.04.2026**
(21) Application number: 23941091.3
(22) Date of filing: 16.06.2023
(51) Int. Cl.: G05D 1/00, G05D 109/20, G05D 111/00

(54) **AIRCRAFT CONTROL METHOD, AND MOBILE PLATFORM CONTROL METHOD AND DEVICE**

(71) Applicant: SZ Shanzhi Technology Co., Ltd., Shenzhen, Guangdong 518000 (CN)
(72) Inventor: LAI, Zhenzhou, Shenzhen, Guangdong 518000 (CN); XU, Haonan, Shenzhen, Guangdong 518000 (CN); FAN, Liming, Shenzhen, Guangdong 518000 (CN); MO, Bangjie, Shenzhen, Guangdong 518000 (CN); ZHAO, Yang, Shenzhen, Guangdong 518000 (CN); YANG, Tao, Shenzhen, Guangdong 518000 (CN)
(74) Representative: Appelt, Christian W.
(86) International application number: PCT/CN2023/100746
(87) International publication number: WO 2024/254857

(57) **Abstract**

A control method of an aerial vehicle, a control method of a movable platform, an apparatus, and a storage medium. The method includes: obtaining current mission parameter(s) of a current flight mission and historical flight data of historical flight mission(s) related to the current mission; obtaining current remaining power energy of the aerial vehicle in real time; and determining whether the aerial vehicle is able to reach the destination of the current flight mission based on the current mission parameter(s), the historical flight data and the current remaining power energy of the aerial vehicle. The current mission parameter(s) are related to the energy consumption of the aerial vehicle, the historical flight data include historical mission parameter(s) and historical energy consumption in the historical flight mission(s), and the historical mission parameter(s) are related to the energy consumption of the aerial vehicle performing the historical mission(s). By combining the historical flight data of the historical flight mission(s) to determine whether the aerial vehicle is able to reach the destination in the current flight mission, a more accurate determination results may be obtained.

## Description

### TECHNICAL FIELD

The present disclosure generally relates to the field of aerial vehicle control technologies, and, more particularly, to a control method of an aerial vehicle, a control method of a movable platform, and an apparatus.

### BACKGROUND

Movable platforms (such as aerial vehicles, cars, mobile robots, etc.) are widely used in various industries. When a movable platform is used to perform a mission, it is needed to predict whether the movable platform is able to reach a destination, to adopt appropriate control strategies to control the movable platform based on prediction results to ensure the safety of the movable platform during movement. Taking the use of a movable platform in the transportation industry as an example, since the transportation industry has more stringent requirements on whether the movable platform is able to reach the destination, it is needed to accurately determine whether the movable platform is able to reach the destination, to adopt appropriate control strategies based on the determination results to avoid the failure of the transportation mission because of insufficient power energy of the movable platform or even the loss of both the movable platform and the transported goods. Although conventional technologies also judge the remaining power energy of the movable platform, because the judgment on whether the movable platform is able to reach the destination is not accurate enough, it is still possible that the movable platform will fail the transportation mission because of insufficient power energy. Therefore, it is needed to provide a solution that is able to accurately determine whether the movable platform is able to reach the destination.

### SUMMARY

In view of the above, the embodiments of the present disclosure provide a control method of an aerial vehicle, a control method of a movable platform, an apparatus, and a storage medium based on this.

In a first aspect, the present disclosure provides a control method of an aerial vehicle, including: obtaining current mission parameter(s) of a current flight mission and historical flight data of historical flight mission(s) related to the current mission; where: the current mission parameter(s) are related to the energy consumption of the aerial vehicle, the historical flight data include historical mission parameter(s) and historical energy consumption in the historical flight mission(s), and the historical mission parameter(s) are related to the energy consumption of the aerial vehicle performing the historical mission(s); obtaining current remaining power energy of the aerial vehicle in real time; and determining whether the aerial vehicle is able to reach the destination of the current flight mission based on the current mission parameter(s), the historical flight data and the current remaining power energy of the aerial vehicle.

In a second aspect, the present disclosure provides a control method of an aerial vehicle, including: before the aerial vehicle takes off, obtaining positioning signal(s) of positioning sensor(s) carried by the aerial vehicle; determining distribution of obstacles around the aerial vehicle based on the positioning signal(s) of the positioning sensor(s) carried by the aerial vehicle; and based on the distribution of obstacles around the aerial vehicle, determining whether to control the aerial vehicle to take off.

In a third aspect, the present disclosure provides a control method of an aerial vehicle, including: after the aerial vehicle lands, controlling the aerial vehicle to automatically enter a locked state, wherein propellers of the aerial vehicle cannot rotate when the aerial vehicle is in the locked state; detecting whether an operation component at the body of the aerial vehicle is triggered by a user; and in response to the operation component at the body of the aerial vehicle being triggered by the user, releasing the locked state.

In a fourth aspect, the present disclosure provides a control method of a movable platform, including: obtaining current mission parameter(s) of a current mission and historical motion data of historical mission(s) related to the current mission, where: the current mission parameter(s) are related to the energy consumption of the movable platform, the historical motion data include historical mission parameter(s) and historical energy consumption in the historical mission(s), and the historical mission parameter(s) are related to the energy consumption of the movable platform performing the historical mission(s); obtaining current remaining power energy of the movable platform in real time; and determining whether the movable platform is able to reach the destination of the current mission based on the current mission parameter(s), the historical motion data and the current remaining power energy of the movable platform.

In a fifth aspect, the present disclosure provides a control apparatus of an aerial vehicle, including a processor, a memory, and a computer program stored in the memory for execution by the processor. When executing the computer program, the processor is configured to perform: obtaining current mission parameter(s) of a current flight mission and historical flight data of historical flight mission(s) related to the current mission; where: the current mission parameter(s) are related to the energy consumption of the aerial vehicle, the historical flight data include historical mission parameter(s) and historical energy consumption in the historical flight mission(s), and the historical mission parameter(s) are related to the energy consumption of the aerial vehicle performing the historical mission(s); obtaining current remaining power energy of the aerial vehicle in real time; and determining whether the aerial vehicle is able to reach the destination of the current flight mission based on the current mission parameter(s), the historical flight data and the current remaining power energy of the aerial vehicle.

In a sixth aspect, the present disclosure provides a control apparatus of an aerial vehicle, including a processor, a memory, and a computer program stored in the memory for execution by the processor. When executing the computer program, the processor is configured to perform: before the aerial vehicle takes off, obtaining positioning signal(s) of positioning sensor(s) carried by the aerial vehicle; determining distribution of obstacles around the aerial vehicle based on the positioning signal(s) of the positioning sensor(s) carried by the aerial vehicle; and based on the distribution of obstacles around the aerial vehicle, determining whether to control the aerial vehicle to take off.

In a seventh aspect, the present disclosure provides a control apparatus of an aerial vehicle, including a processor, a memory, and a computer program stored in the memory for execution by the processor. When executing the computer program, the processor is configured to perform: after the aerial vehicle lands, controlling the aerial vehicle to automatically enter a locked state, wherein propellers of the aerial vehicle cannot rotate when the aerial vehicle is in the locked state; detecting whether an operation component at the body of the aerial vehicle is triggered by a user; and in response to the operation component at the body of the aerial vehicle being triggered by the user, releasing the locked state.

In an eighth aspect, the present disclosure also provides a control apparatus of a movable platform, comprising a processor, a memory, and a computer program stored in the memory for execution by the processor. When executing the computer program, the processor is configured to perform: obtaining current mission parameter(s) of a current mission and historical motion data of historical mission(s) related to the current mission, wherein: the current mission parameter(s) are related to the energy consumption of the movable platform, the historical motion data include historical mission parameter(s) and historical energy consumption in the historical mission(s), and the historical mission parameter(s) are related to the energy consumption of the movable platform performing the historical mission(s); obtaining current remaining power energy of the movable platform in real time; and determining whether the movable platform is able to reach the destination of the current mission based on the current mission parameter(s), the historical motion data and the current remaining power energy of the movable platform.

In a ninth aspect, the present disclosure also provides a computer-readable storage medium. The storage medium stores a computer program, and, when the computer program is executed, the method according to the first aspect, the second aspect, the third aspect, and/or the fourth aspect is performed.

In the embodiments of the present disclosure, when determining whether the aerial vehicle is able to reach a destination of a current flight mission, historical flight data of some historical flight mission(s) related to the current flight mission may be used to assist in the determination. The historical flight mission(s) may be mission(s) with high reference value for the current flight mission. For example, the historical mission parameter(s) related to energy consumption in the historical flight mission(s) may be the same or close to the mission parameter(s) related to energy consumption in the current flight mission. Thus, by using the historical flight data of the historical flight mission(s) as a reference, it may be possible to make a more accurate judgment on whether the aerial vehicle is able to reach the destination in the current flight mission.

It should be understood that the above general description and the following detailed description are only examples and illustrative, and do not limit the scope of the present disclosure.

### BRIEF DESCRIPTION OF THE DRAWINGS

To more clearly illustrate the technical solutions of the embodiments of the present disclosure, the drawings needed for use in the description of the embodiments will be briefly introduced below. Obviously, the drawings described below are some embodiments of the present disclosure. For those ordinary in the art, other drawings are able to be obtained based on these drawings without any creative work.
FIG. 1 is a flowchart of a control method of an aerial vehicle consistent with embodiments of the present disclosure.
FIG. 2 is a schematic diagram showing setting alternate landing points consistent with embodiments of the present disclosure.
FIG. 3 is a schematic diagram of a planned route from a current location to an alternate landing point consistent with embodiments of the present disclosure.
FIG. 4 is another schematic diagram of a planned route from a current location to an alternate landing point consistent with embodiments of the present disclosure.
FIG. 5 is a schematic diagram of a control device displaying alternate landing point flight information consistent with embodiments of the present disclosure.
FIG. 6 is a schematic diagram showing cloud-based management of alternate landing point usage information consistent with embodiments of the present disclosure.
FIG. 7 is a schematic diagram showing areas below a mission route are not suitable for landing consistent with embodiments of the present disclosure.
FIG. 8 is schematic diagram showing taking off and controlling an aerial vehicle to hover for self-testing consistent with embodiments of the present disclosure.
FIG. 9 is a schematic diagram showing a positioning signal of an aerial vehicle is blocked consistent with embodiments of the present disclosure.
FIG. 10 is a schematic diagram showing determining obstacle distribution based on a positioning signal theoretically received by an aerial vehicle and a positioning signal actually received consistent with embodiments of the present disclosure.
FIG. 11 is a schematic diagram showing possible threat to the life safety of surrounding users after an aerial vehicle lands, consistent with embodiments of the present disclosure.
FIG. 12 is a schematic diagram of a logical structure of a control apparatus of an aerial vehicle, consistent with embodiments of the present disclosure.
FIG. 13 is a schematic diagram of a logical structure of a control apparatus of a movable platform, consistent with embodiments of the present disclosure.

### DETAILED DESCRIPTION OF THE EMBODIMENTS

The technical solution in the embodiments of the present disclosure will be clearly and completely described below in conjunction with the drawings in the embodiments of the present disclosure. Obviously, the described embodiments are part of the embodiments of the present application, not all of the embodiments. Based on the embodiments in the present disclosure, all other embodiments obtained by those skilled in the art without creative work are within the scope and protection of the present disclosure.

With the development of technology, various types of movable platforms such as aerial vehicle, logistics vehicles, robots, etc., are widely used in various industries. When using a movable platform to perform a mission, it is needed to predict whether the movable platform is able to reach the destination, to adopt appropriate control strategies to control the movable platform based on the prediction results and ensure the safety of the movable platform during movement. Taking the use of a movable platform in the transportation industry as an example, since the transportation industry has more stringent requirements on whether the movable platform is able to reach the destination, it is needed to accurately determine whether the movable platform is able to reach the destination before or during the execution of the mission, to adopt appropriate control strategies based on the judgment results to avoid the failure of the transportation mission or even the loss of both the movable platform and the transported load because of insufficient power energy.

For example, for movable platforms (such as logistics machines) widely used in the field of logistics, it is particularly important to determine whether they are able to reach the destination. If they cannot reach the destination, not only will the transportation mission fail to be completed, but also resources will be wasted. In addition, they may also land or get lost on the way because of insufficient power energy, which may easily cause the loss of the movable platforms and the goods, resulting in huge losses. Therefore, compared with other types of movable platforms, logistics movable platforms need to make more accurate judgments on whether they are able to reach the destination.

Although some existing technologies are able to also predict the power energy consumption of a movable platform during the execution of the mission, and then determine whether the movable platform is able to reach the destination, the judgment result is not accurate enough, and it is still possible that the movable platform will fail the transportation mission because of insufficient power energy. Therefore, it is needed to provide a solution that is able to more accurately determine whether the movable platform is able to reach the destination.

Based on this, the embodiments of the present disclosure provides a control method for an aerial vehicle. When determining whether the aerial vehicle is able to reach a destination of a current flight mission, historical flight data of some historical flight mission(s) related to the current flight mission may be used to assist in the determination. The historical flight mission(s) may be mission(s) with high reference value for the current flight mission. For example, the historical mission parameter(s) related to energy consumption in the historical flight mission(s) may be the same or close to the mission parameter(s) related to energy consumption in the current flight mission. Thus, by using the historical flight data of the historical flight mission(s) as a reference, it may be possible to make a more accurate judgment on whether the aerial vehicle is able to reach the destination in the current flight mission.

In some scenarios, the control method of the aerial vehicle provided by the embodiments of the present disclosure may be executed by the aerial vehicle, for example, it may be executed by a control apparatus or processor in the aerial vehicle. In some other scenarios, the control method may also be executed by a control device of the aerial vehicle, which may be a mobile phone, a cloud platform server, etc., that is connected to the aerial vehicle for communication. After determining whether the aerial vehicle is able to reach the destination, the control device may notify the aerial vehicle.

The aerial vehicle in the embodiments of the present disclosure may be various types of unmanned aerial vehicles, such as logistics aerial vehicles. Alternatively, it may also be a manned aerial vehicle. A power source of the aerial vehicle may be electricity, fuel, or other forms of energy, which is not limited by the embodiments of the present disclosure.

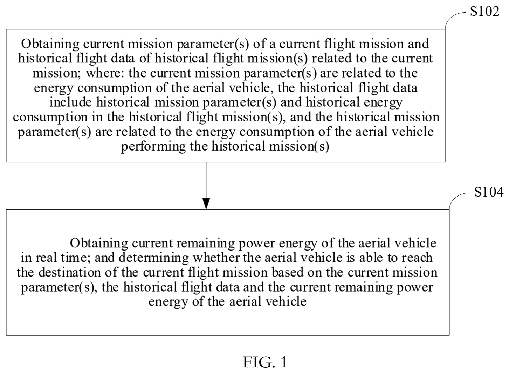

In one embodiment, as shown in FIG. 1, the control method of the aerial vehicle includes S102 and S104.

At S102, current mission parameter(s) of a current flight mission and historical flight data of historical flight mission(s) related to the current mission are obtained. The current mission parameter(s) may be related to the energy consumption of the aerial vehicle, and the historical flight data may include the historical mission parameter(s) and the historical energy consumption in the historical flight mission(s). The historical mission parameter(s) may be related to the energy consumption of the aerial vehicle executing the historical mission(s).

At S102, the mission parameter(s) of the current flight mission (hereinafter referred to as the current mission parameter(s)) may be obtained, and the current mission parameter(s) may be related to the energy consumption of the aerial vehicle, that is, various parameters that may affect the energy consumption of the aerial vehicle. For example, the current mission parameter(s) may include route distance, route altitude, flight environment parameter(s), the weight of the load carried, etc., corresponding to the current flight mission.

Further, the historical flight data of the historical flight mission(s) related to the current flight mission may also be obtained. The historical flight data may include the mission parameter(s) of the historical flight mission(s) (hereinafter referred to as the historical mission parameter(s)) and the historical energy consumption. The historical mission parameter(s) may include various parameters related to the energy consumption of the aerial vehicle executing the historical flight mission(s), and the historical energy consumption may be the energy consumption of the aerial vehicle when executing the historical flight mission(s).

For different types of aerial vehicles, their power energy may be also different. For example, the power energy may be electric energy, fuel, etc. Accordingly, the energy consumption may be electrical power consumption, fuel consumption, etc.

When part or all of the historical mission parameter(s) in one historical flight mission are the same or relatively close to the current mission parameter(s) in the current flight mission, it may be considered that the historical flight mission is related to the current flight mission. Since the mission parameter(s) are parameter(s) related to the energy consumption of the aerial vehicle, the parameter(s) may be relatively close, such that the power energy consumption when performing the flight mission is also relatively close. Therefore, they may have a high reference value for the estimation of the power energy consumption of the current flight mission. Therefore, the historical experience information of the historical flight mission(s) may be combined to make a more accurate prediction of whether the aerial vehicle is able to reach the destination in the current flight mission.

At S104, current remaining power energy of the aerial vehicle performing the current flight mission is obtained in real time; and whether the aerial vehicle is able to reach the destination of the current flight mission is determined based on the current mission parameter(s), the historical flight data, and the current remaining power energy of the aerial vehicle.

At S104, the remaining power energy of the aerial vehicle performing the current flight mission may be obtained in real time. And, based on the current mission parameter(s), the historical flight data and the remaining power energy, it may be determined whether the aerial vehicle is able to reach the destination of the current flight mission.

There may be many specific determination methods. For example, in one embodiment, a model may be pre-trained using the historical flight data, and the relationship between the mission parameter(s) and energy consumption may be learned through the model. Then, the trained model may be used to predict the energy consumption of the current flight mission based on the current mission parameter(s), and then combined with the remaining power energy of the aerial vehicle to determine whether the aerial vehicle is able to reach the destination of the current flight mission.

Alternatively, in another embodiment, the energy consumption of the current flight mission may be directly estimated based on the difference between the current mission parameter(s) and the historical mission parameter(s), as well as the historical energy consumption, to determine whether the destination is able to be reached.

In some embodiments, the types of current mission parameter(s) and/or historical mission parameter(s) may include one or more of the following: flight mission route parameter(s), the weight of the load carried by the aerial vehicle, or flight environment parameter(s). The route parameter(s) may include the location information of each waypoint in the route, or the distance or flight altitude of the route. The flight environment parameter(s) may include the wind speed, altitude, or obstacle distribution (in a scene with many obstacles, the aerial vehicle needs to avoid obstacles frequently, which will also lead to increased energy consumption) of the current environment.

In some embodiments, the models of aerial vehicles performing the historical flight mission(s) may be consistent with the model of the aerial vehicle performing the current flight mission. Usually, the energy consumption of aerial vehicles of different models may be quite different. To accurately calculate the energy consumption of the current flight mission with the help of the historical flight data of the historical flight mission(s), the models of the aerial vehicles of the historical flight mission(s) may be kept consistent with the model of the aerial vehicle of the current flight mission as much as possible.

In some embodiments, the impact of the route on energy consumption may also be relatively large. For example, the route distance, route altitude, etc., may have a great impact on the energy consumption during the flight process. Therefore, when selecting the historical flight mission(s) as references, the historical flight mission(s) whose overlap rate with the route of the current flight mission is larger than a preset threshold may be selected. For example, the overlap rate of the two flight mission(s) may be larger than 80%, indicating that their flight routes are generally similar, and thus have a higher reference value.

In some embodiments, the flight environment may also have a certain impact on the energy consumption of the aerial vehicle. For example, the magnitude of the environmental wind speed, the altitude, etc., may affect the energy consumption during the flight process. Therefore, when selecting the historical flight mission(s) as the references, the historical flight mission(s) whose flight environment parameter(s) have a difference less than or equal to the preset threshold from the flight environment parameter(s) of the current flight mission may be selected to ensure that the difference in the flight environment of the two mission(s) is not too large.

In some embodiments, the load weight carried by the aerial vehicle may also have a significant impact on energy consumption. Therefore, when selecting the historical flight mission(s) as the references, the historical flight mission(s) whose load weight is less than or equal to the preset threshold value may be selected to ensure that the load weights of the mission(s) are close.

Of course, in practical applications, the historical mission(s) may meet one of the above conditions, or may also meet multiple conditions at the same time, which may be flexibly set based on actual needs.

In some embodiments, after obtaining the determination result of whether the aerial vehicle is able to reach the destination, the aerial vehicle may be controlled based on the determination result. The aerial vehicle may be controlled based on the specific determination timing and determination result. For example, when the aerial vehicle is determined to be unable to reach the destination before the current mission is performed, the current flight mission may be suspended. When the aerial vehicle is determined to be unable to reach the destination during the execution of the current flight mission, it may be needed to consider how to control the aerial vehicle to land to ensure the safety of the aerial vehicle as much as possible. By controlling the aerial vehicle based on the determination result, a suitable strategy may be adopted to avoid waste of resources and ensure the safety of the aerial vehicle.

In some embodiments, the operation of determining whether the aerial vehicle is able to reach the destination may be performed before the aerial vehicle performs the current flight mission. For example, the current mission parameter(s) and historical flight data may be obtained and the determination result may be obtained before the current flight mission begins. When the determination result is that the aerial vehicle is able to reach the destination, the aerial vehicle may be controlled to perform the current flight mission. Otherwise, an alarm message may be issued or the current flight mission may be suspended. By making the accurate determination before performing the mission, it may be possible to avoid wasting resources induced by controlling the aerial vehicle to perform the flight mission with insufficient power energy to support the aerial vehicle to reach the destination.

In some embodiments, considering that some current mission parameter(s) may only be obtained after the aerial vehicle takes off, a hovering stage may be set after the aerial vehicle takes off and before the current mission is performed. When the aerial vehicle is in the hovering stage, the current mission parameter(s) and historical flight data may be obtained, and then the determination result may be obtained.

In some embodiments, even if it is determined that the aerial vehicle is able to reach the destination before the mission is performed, the initial determination result may be inaccurate because of changes in various factors (e.g., changes in ambient wind speed, hardware performance degradation or failure, etc.) during the mission. To ensure the safety of the aerial vehicle throughout the flight, the current mission parameter(s) may also be obtained in real time during the mission, and then the aerial vehicle may be determined whether it is able to reach the destination based on the latest acquired current mission parameter(s) and the historical flight data. When it is determined that the aerial vehicle is able to reach the destination, the aerial vehicle may be controlled to continue performing the current flight mission.

In some embodiments, when it is determined that the aerial vehicle cannot reach the destination, to avoid the loss of the aerial vehicle and the carried load, it may be determined whether the unmanned aerial vehicle is able to reach any preset alternate landing point. When it is determined that the aerial vehicle is able to reach preset alternate landing points, the target alternate landing point may be selected from the accessible alternate landing points, and the aerial vehicle may be controlled to land at the target alternate landing point.

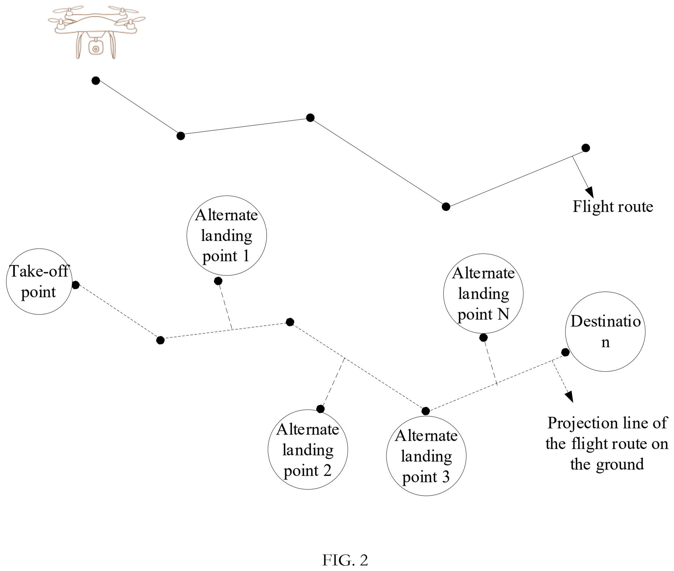

The alternate landing points may be a plurality of landing points suitable for the aerial vehicle to land that are preset by the user. As shown in FIG. 2, in some scenarios, the alternate landing points may be set on the projection line of the route of the current flight mission on the ground, that is, directly landing on the ground below the route. In some scenarios, considering that not all areas below the route are suitable for landing, the alternate landing points may be located near the projection line of the route of the current flight mission on the ground. For example, one alternate landing point may be a point within a preset distance range of the projection line. The alternate landing point may be a point selected by the user that is suitable for landing. For example, The alternate landing point may be a relatively flat landing point with no obstacles around it, to ensure the safe landing of the aerial vehicle. At the same time, by setting an alternate landing point, it may also be convenient for users to find the aerial vehicle in the scenario where the aerial vehicle automatically shuts down due to insufficient power.

In some embodiment, the route from the current position of the aerial vehicle to each preset alternate landing point may be planned in real time during the aerial vehicle's execution of the current flight mission, and then the power energy required from the current position to each alternate landing point may be determined based on the planned route. Whether the aerial vehicle is able to reach each alternate landing point may be determined based on the required power energy and the remaining power energy of the aerial vehicle. By planning the route to the alternate landing points in real time during the flight, when it is detected that the aerial vehicle cannot reach the destination, whether the aerial vehicle is able to reach the alternate landing points may be quickly determined based on the planned routes, and a suitable alternate landing point may be selected for landing. When planning the route from the current position of the aerial vehicle to one alternate landing point, the overall principle may be that the route should minimize the consumption of the aerial vehicle's power energy. At the same time, the route may also need to have a high degree of safety. The high degree of safety may be reflected in the fact that the flight route of the aerial vehicle is relatively certain, which is convenient for subsequent search for the aerial vehicle. For example, taking the aerial vehicle as a logistics aerial vehicle as an example, since the logistics aerial vehicle carries goods, it may be particularly important to avoid the loss of goods during the flight. Therefore, for the logistics aerial vehicle, it may usually be required that its flight route is relatively fixed so that it is convenient for users to find it after losing contact.

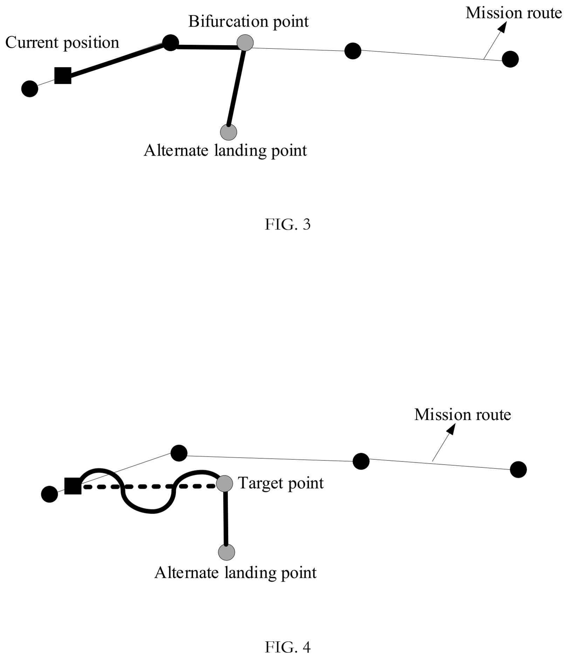

Therefore, in some embodiments, as shown in FIG. 3, for any alternate landing point, when planning the route from the current position to the alternate landing point, the aerial vehicle may be controlled to fly from the current position along the route of the current flight mission to the bifurcation point, and then fly from the bifurcation point to the alternate landing point. The bifurcation point may be located on the route of the current flight mission. For example, for each alternate landing point, the user may set the bifurcation point corresponding to the alternate landing point on the route, and the distance between the bifurcation point and the alternate landing point may be relatively close. Or the bifurcation point may also be the projection point of the alternate landing point on the nearby mission route. In short, this method may ensure that the aerial vehicle is able to fly along the mission route as much as possible during the process from the current position to the alternate landing point, thereby improving the safety during the flight.

In some embodiments, as shown in FIG. 4, for any alternate landing point, when planning the route from the current position to the alternate landing point, the aerial vehicle may be controlled to fly from the current position to the target point, and then from the target point to the alternate landing point. The target point may be located directly above the alternate landing point. It should be pointed out that "directly above" does not mean that the target point is required to be completely vertically directly above the alternate landing point, and the target point may also deviate with a certain angle range, as long as the target point is roughly directly above the alternate landing point. When the aerial vehicle flies from the current position to the target point, it may fly directly along the line connecting the current position and the target point in the horizontal direction, and the flight altitude may be adjusted up and down based on the obstacle situation in the vertical direction. Compared with the method of flying directly along the mission route, this route planning method may make the aerial vehicle fly a shorter distance and save more power during the process of landing at the alternate landing point. Also, because the horizontal direction is generally along the line connecting the current position and the target point, the safety may be relatively high, and, even when the aerial vehicle is lost, it may be found along the line.

In some embodiments, there may be multiple alternate landing points that the aerial vehicle is able to reach from the current position, and which alternate landing point to choose specifically may be determined by the user. For example, after determining the accessible alternate landing points, the flight information corresponding to each accessible alternate landing point may be sent to the control device of the aerial vehicle, and then displayed to the user through the control device. The user may trigger the alternate landing point selection instruction on the control device based on the flight information and select the alternate landing point he needs. Then, the target alternate landing point may be selected from the accessible alternate landing points based on the alternate landing point selection instruction triggered by the user, and the aerial vehicle may be controlled to land at the target alternate landing point.

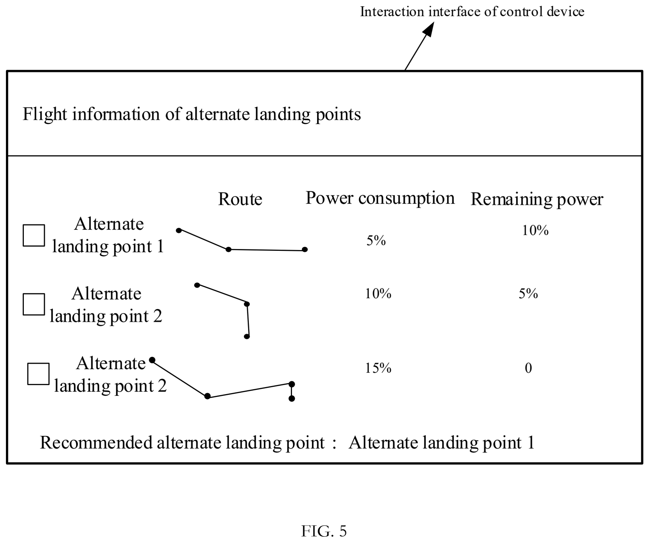

In some embodiments, the flight information may include the route parameter(s) between the current position and each accessible alternate landing point, the power energy required for the aerial vehicle to land at each accessible alternate landing point, or the remaining power energy after the aerial vehicle lands at each accessible alternate landing point. Usually, after the aerial vehicle lands at the alternate landing point, the user may be more concerned about: the location of the aerial vehicle at this time, such as the distance from the user, how much power energy the aerial vehicle needs to consume to reach each alternate landing point, and how much is the remaining power energy of the aerial vehicle after arriving at the alternate landing point, to facilitate the subsequent search for the aerial vehicle. Therefore, as shown in FIG. 5, the above-mentioned flight information may be sent to the control device for display to the user, such that the user is able to select the most suitable alternate landing plan based on this information.

In some embodiments, as shown in FIG. 5, in a scenario where there are multiple accessible alternate landing points, a recommended alternate landing point may be selected from the multiple accessible alternate landing points, and then the recommended alternate landing point may be displayed to the user through the control device of the aerial vehicle. The recommended alternate landing point may be one alternate landing point selected from the multiple alternate landing points based on a certain screening mechanism, for example, may include an alternate landing point that is closest to the user, or closest to the current position, or consumes the least energy. When the user does not trigger the alternate landing point selection instruction after viewing the flight information corresponding to the alternate landing points displayed by the control device, the recommended alternate landing point may be directly determined as the target alternate landing point.

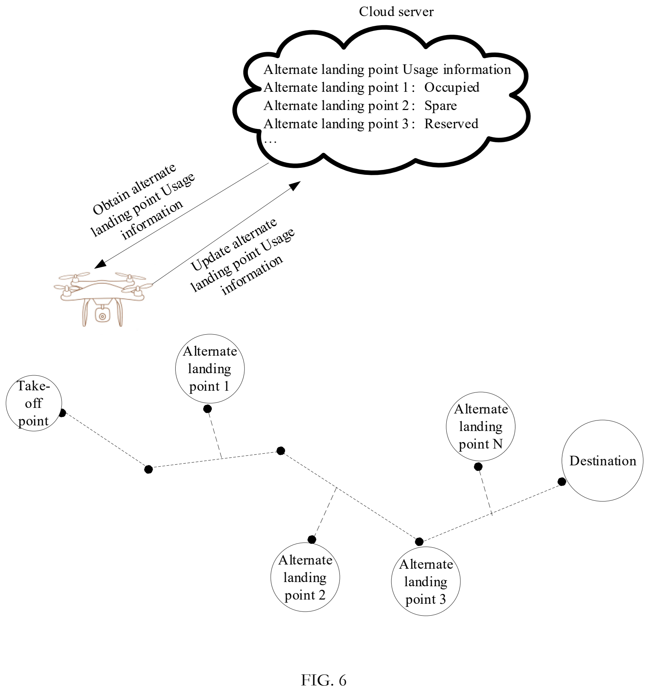

Considering that one alternate landing point may be exclusive to a single aerial vehicle or shared by multiple aerial vehicles, and the alternate landing point may be reused, it may be needed to manage the alternate landing points. For example, as shown in FIG. 6, the usage information of each alternate landing point may be stored through a cloud server, and the usage information may be whether each alternate landing point is occupied, whether the alternate landing point is reserved, and the owner of the alternate landing point (for example, whether the alternate landing point is public or private to a certain aerial vehicle). After the aerial vehicle lands at one alternate point, the status of the alternate point may be updated to "occupied." After the aerial vehicle determines to land at one alternate point, it may also reserve the alternate point through the cloud server such that the status of the alternate point is updated to "reserved."

In some embodiments, as shown in FIG. 6, before determining whether the aerial vehicle is able to reach any preset alternate landing point, the usage information of the alternate landing points may be obtained first, and the currently available alternate landing points may be obtained from the preset alternate landing points based on the usage information. And then, it may be determined whether the aerial vehicle is able to reach any available alternate landing point. After determining the target alternate landing point to be landed, a reservation request may also be sent to the cloud server to reserve the target alternate landing point and update the status of the target alternate landing point to "Reserved." By managing the usage information of the alternate landing points, the orderly use of the alternate landing points may be guaranteed to avoid conflicts.

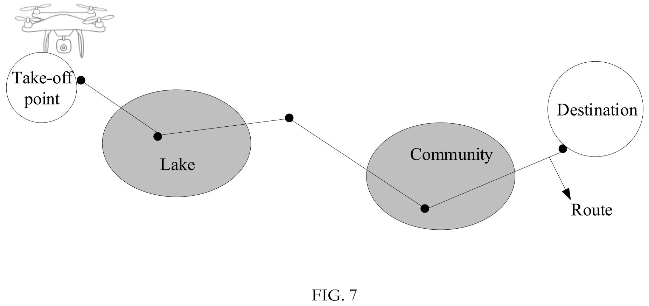

In some embodiments, during the flight of the aerial vehicle, because of various factors, the current remaining power energy of the aerial vehicle may not be able to support it to reach the destination, and may also not be able to support it to reach any preset alternate landing point. In this case, a forced landing point may be determined for the aerial vehicle based on the surrounding environment information of the aerial vehicle, and the aerial vehicle may be controlled to land at the forced landing point. As shown in FIG. 7, there is not always a suitable landing point below the aerial vehicle's mission route. It may fly over different terrains such as lakes, residential areas, and mountains. When it is determined that the aerial vehicle cannot fly to the destination or the set alternate landing point, an emergency landing may be required to find a relatively safe and less risky landing point.

In some embodiments, when determining the forced landing point, one or more target location points may be determined based on the surrounding environment information of the aerial vehicle, and the current remaining power energy of the aerial vehicle may be able to support the aerial vehicle to land at the one or more target location points. And then, one target location point closest to the current location of the aerial vehicle and/or one target location point with the lowest risk may be selected from the one or more target location points as the forced landing point.

For example, during the forced landing process, the aerial vehicle may directly use its own sensors (such as visual sensors or laser radars) to identify the surrounding environment information, determine which areas are horizontal or which areas are high mountains, construction areas, etc., and then determine one or more target location points which are suitable for landing and the current power is sufficient to support its arrival based on the recognition results of the surrounding environment. Alternatively, the unmanned aerial vehicle may also determine the target location points with the help of a map of the current flight area, and the map may be an onboard map, a map downloaded by the aerial vehicle from the Internet, or a map temporarily constructed by scanning the flight area using its own sensors (such as visual sensors or laser radars).

After determining the target location points, the target location point closest to the current location of the aerial vehicle may be selected as the forced landing point, or the target location point with the lowest risk may be selected as the forced landing point. When evaluating the risk of one target location point, it may be evaluated from multiple aspects such as the risk to the personal and property safety below, the risk to the aerial vehicle itself, or the risk of insufficient power energy (for example, although it is estimated that the target location point is able to be reached, there may be multiple factors that lead to inaccurate estimation results), and then a risk coefficient may be determined. The target location point with the lowest risk coefficient may be selected as the forced landing point.

In some embodiments, when determining whether the aerial vehicle is able to reach the destination of the current flight mission based on the current mission parameter(s), the historical flight data, and the remaining power energy of the aerial vehicle, the estimated energy consumption of the aerial vehicle to perform the current flight mission may be determined based on the historical energy consumption, historical mission parameter(s), and current mission parameter(s). And then it may be determined whether the remaining power energy of the aerial vehicle is larger than the estimated energy consumption. When it is larger, it may be determined that the aerial vehicle is able to reach the destination of the current flight mission. Of course, after determining the estimated energy consumption, a certain surplus may also be added on the basis of the estimated energy consumption, and then a comparison with the remaining power energy may be performed to ensure that the aerial vehicle is able to reach the destination safely.

Considering that both historical mission parameter(s) and current mission parameter(s) are closely related to the energy consumption of the aerial vehicle during flight, the parameters may directly determine the energy consumption of executing the flight mission. When the historical mission parameter(s) are closer to the current mission parameter(s), for example, when the routes, load weights, or flight environments of the two mission(s) are closer, the energy consumption of the two mission(s) may also be closer. Therefore, in some embodiments, when determining the estimated energy consumption, the estimated energy consumption of the aerial vehicle to perform the current flight mission may be determined based on the difference or ratio between the historical mission parameter(s) and the current mission parameter(s), as well as the historical energy consumption in the historical flight mission(s). And then, based on the estimated energy consumption and the remaining power energy of the aerial vehicle, it may be determined whether the aerial vehicle is able to reach the destination of the current flight mission.

In some embodiments, when the difference or ratio between the current mission parameter(s) and the historical mission parameter(s) increases, the difference between the estimated energy consumption of the aerial vehicle to complete the current flight mission and the historical energy consumption required for the historical flight mission(s) may also increase.

For example, in practical applications, the impact of a certain mission parameter on energy consumption may be determined based on a large amount of historical flight data. For example, taking the load weight as an example, a large number of historical flight mission(s) with the same other mission parameter(s) but different load weights may be used to determine the relationship between mission parameter(s) and energy consumption. For example, assuming that the energy consumption increases by 1% for every 1 kg increase in load, the energy consumption may increase by 2% for every 10 km increase in route. Similar methods may be used for other mission parameter(s). Therefore, when it is found that the load increases by 2kg and the route distance increases by 20km, etc., when the current mission parameter(s) are compared with the historical mission parameter(s), it may be preliminarily determined that the energy consumption of the current flight mission increases by 6% compared with the historical energy consumption. Of course, the above is just a simple example. When actually estimating, more factors may be considered. For example, a more complex model or formula may be used to calculate the estimated energy consumption.

In some embodiments, when determining the estimated energy consumption, a unit energy consumption (historical energy consumption/(mileage*load weight)) may also be calculated based on the historical mission parameter(s) and the historical energy consumption. Of course, when a more refined calculation is to be performed, the unit energy consumption may also take into account the flight altitude (i.e., altitude), ambient wind speed, etc. After determining the unit energy consumption of the historical flight mission, the unit power consumption of the current flight mission may be estimated based on the unit power consumption and the safety factor. For example, the unit power consumption of the current flight mission = historical unit energy consumption * safety factor, where the safety factor may be determined based on the difference between historical flight parameter(s) and current flight parameter(s). For example, when the two are closer, the safety factor may be smaller. For example, when the aerial vehicle type, route, or flight environment of the two flight mission(s) are the same, the safety factor may be smaller. When the two are very different, for example, when only the aerial vehicle type is the same and the others are different, the safety factor may be set larger. After determining the unit power consumption of the current flight mission, the unit power consumption and the current mission parameter(s) may be used to determine the estimated energy consumption of the current flight mission.

Generally speaking, to make the historical flight data of the historical flight mission more valuable for reference, it may be usually required that the historical mission parameter(s) of the historical flight mission and the current mission parameter(s) of the current flight mission are as close as possible. Of course, when there is one historical flight mission whose mission parameter(s) such as the aerial vehicle model, route, flight environment, and carried load weight are consistent with the current flight mission, the reference value of the historical flight data of the historical flight mission may be higher, and the historical flight data of the historical flight mission may be used first. However, in actual applications, there may not be any historical flight mission(s) with the above mission parameter(s) that are completely consistent. Therefore, in some embodiments, when selecting the historical flight mission(s) as references, some historical flight mission(s) with consistent key mission parameter(s) may be preferentially selected, where the mission parameter(s) are ranked from high to low in priority as follows: (1) aerial vehicle model, (2) route parameter(s), (3) load weight, and (4) flight environment parameter(s).

In some embodiments, considering that the aerial vehicle model and route have a great impact on energy consumption, only when the two mission parameter(s) of the two mission(s) are consistent, the historical flight mission may have a high reference value. Therefore, the historical flight mission whose aerial vehicle model and mission route are consistent with the current flight mission may be referred to as a reference historical flight mission, which is used as a reference for determining whether the aerial vehicle may reach the destination in the current flight mission. Therefore, when obtaining historical flight data used as a reference, the user may first search from the historical flight database to determine whether there is a reference historical flight mission that may be used as a reference for the current flight mission. When there is, the flight data of the reference historical flight mission may be used as the historical flight data. The aerial vehicle that performs the reference historical flight mission may be consistent with the aerial vehicle that performs the current flight mission, and the route of the reference historical flight mission may be consistent with the route of the current flight mission.

In some embodiments, when it is found that the above-mentioned reference historical flight mission does not exist in the database, the aerial vehicle may be controlled to pre-fly according to the route of the current flight mission, and the flight data obtained from this pre-flight may be used as the above-mentioned historical flight data. By controlling the current aerial vehicle to pre-fly according to the route of the current flight mission, a reference historical flight mission with a model and route consistent with the current flight mission may be obtained. When controlling the current aerial vehicle to pre-fly, the aerial vehicle may be unloaded (i.e., without a load) to save energy. Alternatively, the aerial vehicle may also pre-fly with a preset weight of load to obtain historical flight data with higher reference value.

Considering that the aerial vehicle itself may have some faults and is not suitable for flight, or the current flight environment is relatively bad (for example, the wind speed is too high and not suitable for flight), to ensure the flight safety of the aerial vehicle, in some embodiments, before the aerial vehicle performs the current mission, it may be determined whether the state parameter(s) and/or flight environment parameter(s) of the aerial vehicle meet the flight conditions. When not, an alarm message may be issued or the current flight mission may be suspended. When the state parameter(s) and/or flight environment parameter(s) of the aerial vehicle meet the flight conditions, an operation may be performed to determine whether the aerial vehicle may reach the destination of the current flight mission based on the current mission parameter(s), historical flight data, and the remaining power energy of the aerial vehicle. Satisfying the flight conditions may mean that the state parameter(s) and/or flight environment parameter(s) of the aerial vehicle are within a certain threshold range, for example, less than a certain upper threshold, or larger than a certain lower threshold. For example, after the aerial vehicle takes off, the aerial vehicle may be controlled to hover. During the hovering process, the flight state parameter(s) and/or flight environment parameter(s) may be self-checked. When it is found that the flight state parameter(s) and/or flight environment parameter(s) do not meet the flight conditions, an alarm may be issued or the current flight mission may be suspended.

In some embodiments, the state parameter(s) of the aerial vehicle may include one or more of the following: the flight power of the aerial vehicle, the deviation between the center of gravity of the load carried by the aerial vehicle and the center of gravity of the aerial vehicle, the vibration energy of the aerial vehicle, the state parameter(s) of the aerial vehicle's motor, or the weight of the load carried by the aerial vehicle.

For example, when the flight power of the aerial vehicle is too large, problems may often occur. Therefore, after the aerial vehicle takes off, the aerial vehicle may be controlled to hover, and the flight power of the aerial vehicle during the hovering process may be determined. For example, the power information for a period of time may be read to calculate the average value, or the transient power information may be collected as the flight power. Then it may be determined whether the flight power exceeds the preset power threshold. When it exceeds, an alarm may be issued or the current flight mission may be suspended.

In some scenarios, when users mount a load on the aerial vehicle, the load may not be mounted properly, resulting in a deviation between the center of gravity of the load and the center of gravity of the aerial vehicle, and causing the aerial vehicle to be unbalanced and prone to the risk of rollover during flight. Therefore, the deviation between the center of gravity of the load carried by the aerial vehicle and the center of gravity of the aerial vehicle may be detected first. For example, the center of gravity deviation may be determined by comparing the output of different parts of the aerial vehicle, or the center of gravity deviation may be detected by a force sensor. When the deviation of the center of gravity is determined to exceed a preset threshold, an alarm may be issued or the current flight mission may be suspended.

In some scenarios, an IMU (inertial measurement unit) may be used to check for abnormal vibration of the aerial vehicle. For example, the vibration energy of the aerial vehicle may be detected. When the vibration energy (which may be represented by the peak value of the IMU's time domain signal or a certain energy range of the frequency domain signal) exceeds the preset threshold, it may be considered that the hardware or structure of the aerial vehicle is abnormal, and an alarm may be issued or the current flight mission may be suspended.

In some scenarios, the user may check the state parameter(s) of the motor, such as the motor speed, current, voltage, temperature, etc., to determine whether the state parameter(s) are within the preset threshold range. When not, an alarm may be issued or the current flight mission may be suspended.

In some scenarios, the user may check whether the load weight carried by the aerial vehicle is overweight. For example, a weighing sensor at the aerial vehicle may be used to directly weigh the load to calculate whether the load weight exceeds the preset weight threshold. When it exceeds, an alarm may be issued or the current flight mission may be suspended.

Further, considering that the aerial vehicle may be more dangerous during flight when the ambient wind speed is too high, the wind speed of the current flight environment may also be detected. For example, the aerial vehicle may communicate with a meteorological device to obtain the current wind speed information from the meteorological device, or the aerial vehicle may obtain local wind speed information through the Internet, or the aerial vehicle may estimate the wind speed through the unmanned aerial vehicle's IMU sensor. After determining the wind speed, it may be determined whether the current wind speed exceeds the preset threshold. When it exceeds, an alarm may be issued or the current flight mission may be suspended.

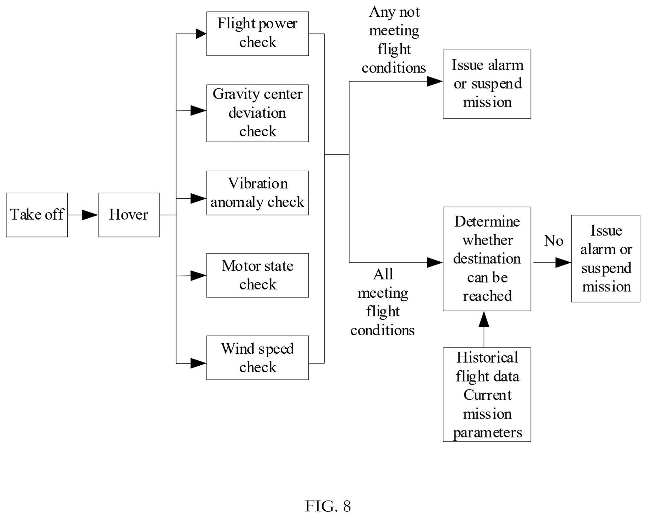

For example, as shown in FIG. 8, after the aerial vehicle takes off, the aerial vehicle may be controlled to hover, and then the above-mentioned flight state parameter(s) and flight environment parameter(s) may be checked. When any of them does not meet the flight conditions, an alarm may be issued or the flight mission may be suspended. When all flight conditions are met, it may be determined whether the destination may be reached based on the current mission parameter(s) and historical flight data. When it cannot be reached, an alarm may be issued or the flight mission may be suspended.

Of course, considering that the flight conditions that ensure the safe flight of the aerial vehicle are different for different flight mission(s), the flight conditions may be adjusted in real time based on one or more parameters of the aerial vehicle state parameter(s), the flight mission route parameter(s), the aerial vehicle load weight, or the flight environment parameter(s). For example, when the weight of the goods carried by the aerial vehicle is different or the altitude of the flight environment is different, the flight power limit of the aerial vehicle may be also different. For example, when the weight of the goods carried is lighter, its flight power may be allowed to be larger. Therefore, the setting of the threshold may be adjusted in real time based on the specific situation of the current flight mission. For the thresholds corresponding to other parameters, similar methods may also be used to adjust in real time to ensure a more accurate prediction of whether the aerial vehicle may fly safely.

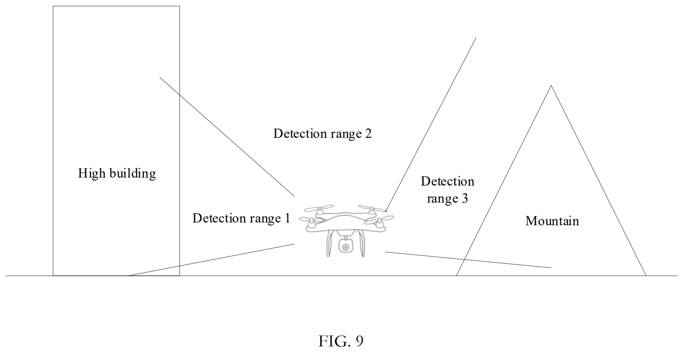

In existing technology, when the aerial vehicle takes off, the sensors on the aerial vehicle are usually used to collect environmental information around the take-off point and determine the distribution of obstacles in the surrounding environment. When the obstacles are far away from the aerial vehicle, the aerial vehicle is controlled to take off. Because of the limited detection range of sensors such as laser radars, they may usually only detect obstacles at a close distance, and cannot accurately detect obstacles at a long distance. During the take-off process of the aerial vehicle, as shown in FIG. 9, there may be some high-rise buildings, mountains, canyons or other relatively large obstacles at a long distance. Although these obstacles will not collide with the aerial vehicle, they may block the positioning signal of the aerial vehicle (for example, satellite signals), resulting in the inability to accurately locate the aerial vehicle (for example, the positioning signal within the detection range 1 of the aerial vehicle may be blocked by high-rise buildings, and the positioning signal within the detection range 2 may be blocked by mountains). This may also bring safety risks to the aerial vehicle to a certain extent.

Based on this, in some embodiments, before the aerial vehicle takes off, the positioning signal(s) of the positioning sensor(s) carried by the aerial vehicle may be obtained, and then the distribution of obstacles around the aerial vehicle may be determined based on the positioning signal(s) of the positioning sensor(s) carried by the aerial vehicle. Based on the distribution of obstacles around the aerial vehicle, it may be determined whether to control the aerial vehicle to take off. For example, the directions of the positioning signal(s) received by the positioning sensor(s) of the aerial vehicle may be determined. When the aerial vehicle receives the positioning signal in all directions, it may mean that there are no large obstacles in all directions.

In some embodiments, for positioning signal(s) such as satellite signals, when the aerial vehicle is at a certain position, the satellite signals that the aerial vehicle is able to receive at that position may be determined. For example, the distribution of satellites above the position may be known. Therefore, when the aerial vehicle is at the position, the positioning signal(s) that it may theoretically receive may also be predicted. Therefore, the distribution of obstacles around the aerial vehicle may be determined based on the difference between the positioning signal(s) actually received by the positioning sensor(s) carried by the aerial vehicle and the positioning signal(s) that the aerial vehicle may theoretically receive when it is at the current position.

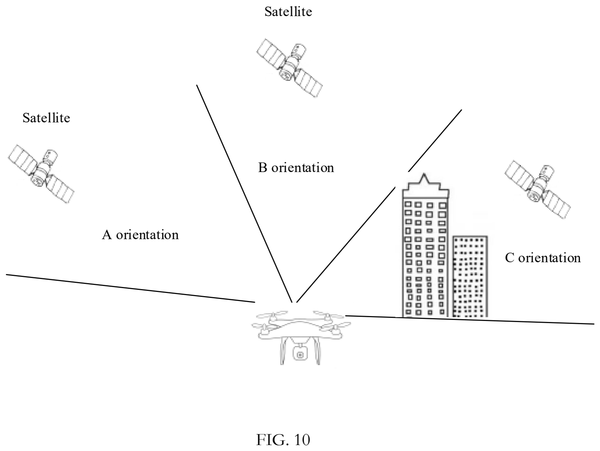

For example, as shown in FIG. 10, assuming that there are three satellites above the aerial vehicle, theoretically, satellite signals may be received in the three directions of A, B, and C, but actually only satellite signals in the two directions of A and B are received. This may mean that the satellite signal in the direction of C is blocked, and there may be obstacles in this area, such as high-rise buildings.

In some embodiments, by more accurately detecting the distribution of obstacles around the take-off point of the aerial vehicle, it may not only avoid collisions with obstacles during take-off, but also avoid obstacles blocking the positioning signal(s) of the aerial vehicles and resulting in inaccurate positioning of the aerial vehicle. When determining the obstacle distribution, the obstacle information sensed by the perception sensors on the aerial vehicle and the obstacle distribution information determined based on the positioning signal(s) of the onboard positioning sensor(s) of the aerial vehicle may be combined to obtain the overall obstacle distribution.

In some embodiments, when determining whether to control the aerial vehicle to take off based on the obstacle distribution, when the solid angle ratio within the preset angle range of the aerial vehicle pitch angle direction is less than the preset ratio based on the obstacle distribution and there is no obstacle within the preset distance range of the aerial vehicle, the aerial vehicle may be controlled to take off. Otherwise, an alarm message may be issued or the flight mission may be suspended.

For example, assuming that an obstacle appears in the range of the aerial vehicle's pitch angle less than 30° in the sky, and the solid angle ratio reaches more than 50%, it may mean that the aerial vehicle may be located in a canyon. Or, when the solid angle ratio of obstacles in the range of the pitch angle exceeding 45° in the sky reaches more than 10%, it may mean that the aerial vehicle is located next to a high-rise building. In the above case, since the positioning signal(s) are blocked, there may be a larger safety hazard when the aerial vehicle is controlled to take off, an alarm message may be issued such that the user may re-select a more suitable take-off point.

For another example, assuming there is an obstacle within a short distance of less than 5m from the aerial vehicle, or there is an obstacle within a short distance of the route after the aerial vehicle takes off, the aerial vehicle may collide with the obstacle, or the load carried by the aerial vehicle may collide with the obstacle. Therefore, it may not be suitable to control the aerial vehicle to take off. Therefore, an alarm message may be issued such that the user may re-select a more suitable take-off point.

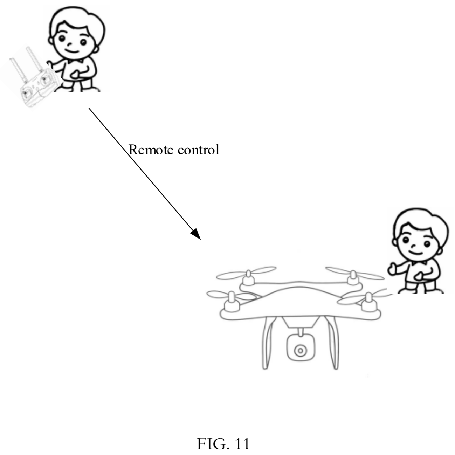

In addition, as shown in FIG. 11, after the aerial vehicle lands, the user may usually walk around the aerial vehicle to check or load or unload the load on the aerial vehicle. when the aerial vehicle suddenly starts the blades at this time, it may endanger the user's life safety. In particular, when the user approaching the aerial vehicle and the user controlling the aerial vehicle are not the same person, when there is an error in the cooperation work, the above situation may occur, which seriously threatens the user's life safety.

To overcome the above problems, in some embodiments, after the aerial vehicle lands, the aerial vehicle may be controlled to automatically enter a locked state. When the aerial vehicle is in the locked state, the propellers of the aerial vehicle cannot rotate. After entering the locked state, it may be detected whether the operation component at the aerial vehicle body is triggered by the user. When the operation component is triggered by the user, the locked state may be released.

After the aerial vehicle lands, it may be controlled to automatically enter the locked state, making it impossible for other personnel to remotely control the aerial vehicle. And the locked state may only be released by triggering the operation component at the body, thus giving the control of the aerial vehicle after landing to the person near the aerial vehicle, avoiding the remote person's wrong operation and causing harm to the person near the aerial vehicle.

In some embodiments, when the aerial vehicle enters the locked state, the power apparatus of the aerial vehicle may be in an off state, and the operation component may be used to turn on the power apparatus. For example, the power apparatus may be the motor of the aerial vehicle. After entering the locked state, the motor of the aerial vehicle may be in the off state, such that the blades of the aerial vehicle may no longer move. The operation component may be a physical button on the body of the aerial vehicle, or other information input components.

For example, in one embodiment, the physical button may be a battery switch button, the locked state may automatically shut down the aerial vehicle, and releasing the locked state may be turning on. After the aerial vehicle lands on the ground, it may automatically shut down, such that remote personnel cannot start the aerial vehicle or operate the aerial vehicle. When the user walks to the side of the aerial vehicle, the unmanned aerial vehicle may be restarted by pressing the battery switch button, that is, the locked state may be released.

In some embodiments, to facilitate the user to know whether the current aerial vehicle has entered the locked state to decide whether to proceed to the next operation, such as unloading the load, after the aerial vehicle enters the locked state, a prompt message may be sent to the user. For example, a status light may be set on the aerial vehicle to prompt the user whether the aerial vehicle has entered the locked state based on the status light. Or a voice prompt apparatus may be used to prompt the user whether the aerial vehicle has entered the locked state.

The present disclosure also provides a control method of an aerial vehicle. The method may include:
before the aerial vehicle takes off, obtaining positioning signal(s) of positioning sensor(s) carried by the aerial vehicle;
determining the distribution of obstacles around the aerial vehicle based on the positioning signal(s) of the positioning sensor(s) carried by the aerial vehicle; and
determining whether to control the aerial vehicle to take off based on the distribution of obstacles around the aerial vehicle.

In some embodiments, determining the distribution of obstacles around the aerial vehicle based on the positioning signal(s) of the positioning sensor(s) carried by the aerial vehicle may include:
determining the distribution of obstacles around the aerial vehicle based on the difference between the positioning signal(s) actually received by the positioning sensor(s) carried by the aerial vehicle and the positioning signal(s) that may be theoretically received when the aerial vehicle is at the current position.

In some embodiments, determining the distribution of obstacles around the aerial vehicle based on the positioning signal(s) of the positioning sensor(s) carried by the aerial vehicle may include:
obtaining obstacle information sensed by the perception sensor at the aerial vehicle;
determining the distribution of obstacles based on the obstacle information and the positioning signal(s) of the positioning sensor(s) carried by the aerial vehicle.

In some embodiments, determining whether to control the aerial vehicle to take off based on the distribution of obstacles may include:
when it is determined based on the distribution of obstacles that the solid angle ratio within the preset angle range of the pitch angle direction of the aerial vehicle is less than the preset ratio and there is no obstacle within the preset distance range of the aerial vehicle, controlling the aerial vehicle to take off.

The specific implementation details of the above-mentioned control of the aerial vehicle may be referred to the description in the above-mentioned embodiments, which will not be repeated here.

The present disclosure also provides another control method of an aerial vehicle. The method may include:
after the aerial vehicle lands, controlling the aerial vehicle to automatically enter a locked state, where the propeller of the aerial vehicle cannot rotate when the aerial vehicle is in the locked state;
detecting whether the operation component at the aerial vehicle body is triggered by the user; and
releasing the locked state in response to the operation component at the aerial vehicle body being triggered by the user.

In some embodiments, the method may also include:
after the aerial vehicle enters the locked state, sending a prompt message to the user.

In some embodiments, when the aerial vehicle enters the locked state, the power apparatus of the aerial vehicle may be in the off state, and the operation component may be used to turn on the power apparatus.

The specific implementation details of the above-mentioned control of the aerial vehicle is able to refer to the description in the above-mentioned embodiments, which will not be repeated here.

Furthermore, based on the same inventive concept, the present disclosure also provides a control method of a movable platform. When determining whether the movable platform is able to reach the destination of the current mission, the historical motion data of some historical mission(s) related to the current mission may be used to assist in the determination, and the historical mission(s) may be mission(s) with high reference value to the current mission. For example, the historical mission parameter(s) related to energy consumption in the historical mission(s) may be the same or close to the mission parameter(s) related to energy consumption in the current mission. Thus, by using the historical motion data of the historical mission(s) as a reference, it may be possible to more accurately determine whether the movable platform in the current mission is able to reach the destination.

The movable platform may include various types of aerial vehicle, such as various unmanned aerial vehicles, and may also include various types of movable platforms on the ground, such as unmanned logistics aerial vehicles, intelligent robots, etc.

The control method of the movable platform may include:
acquiring the current mission parameter(s) of the current mission and the historical motion data of the historical mission(s) related to the current mission, where: the current mission parameter(s) are related to the energy consumption of the movable platform, the historical motion data include the historical mission parameter(s) and historical energy consumption in the historical mission(s), and the historical mission parameter(s) are related to the energy consumption of the movable platform executing the historical mission(s);
acquiring the current remaining power energy of the movable platform in real time; and
based on the current mission parameter(s), the historical motion data and the remaining power energy of the movable platform, determining whether the movable platform is able to reach the destination of the current mission.

In some embodiments, in the method:
the model of the movable platform for executing the historical mission(s) may be consistent with the model of the movable platform for executing the current mission; and/or
the overlap between the motion path of the historical mission(s) and the motion path of the current mission may be larger than a preset overlap; and/or
the difference between the motion environment parameter(s) of the historical mission(s) and the motion environment parameter(s) of the current mission may be less than or equal to a preset threshold; and/or
the difference between the load weight of the historical mission(s) and the load weight of the current mission may be less than or equal to a preset threshold.

In some embodiments, the method may further include:
performing motion control of the movable platform based on the determination result.

In some embodiments, the types of the current mission parameter(s) and/or the historical mission parameter(s) may include one or more of the following: mission motion path parameter(s), load weight carried by the movable platform, or motion environment parameter(s).

In some embodiments, based on the current mission parameter(s), historical motion data, and the remaining power energy of the movable platform, determining whether the movable platform is able to reach the destination of the current mission may include:
determining the estimated energy consumption of the movable platform for performing the current mission based on the historical energy consumption, the historical mission parameter(s), and the current mission parameter(s);
determining whether the movable platform is able to reach the destination of the current mission based on the estimated energy consumption and the remaining power energy of the movable platform.

In some embodiments, the estimated energy consumption of the movable platform for performing the current mission may be determined based on the estimated energy consumption of the movable platform for performing the current mission based on the historical energy consumption, and the difference or ratio between the historical mission parameter(s) and the current mission parameter(s).

Whether the movable platform is able to reach the destination of the current mission may be determined based on the estimated energy consumption and the remaining power energy of the movable platform.

In some embodiments, in response to an increase in the difference or ratio between the current mission parameter(s) and the historical mission parameter(s), the difference between the estimated energy consumption of the movable platform for completing the current mission and the historical energy consumption required for the historical mission(s) may increase.

In some embodiments, the historical motion data may be obtained based on:
in response to the existence of a referenceable historical mission, using the motion data of the referenceable historical mission as the historical motion data, where the movable platform that executes the referenceable historical mission is consistent with the model of the movable platform that executes the current mission, and the motion path of the referenceable historical mission is consistent with the motion path of the current mission.

In some embodiments, the historical motion data may be obtained based on:
in response to the absence of the referenceable historical mission, controlling the movable platform to pre-move according to the motion path of the current mission to obtain the historical motion data, where the movable platform that executes the referenceable historical mission is consistent with the model of the movable platform that executes the current mission, and the motion path of the referenceable historical mission is consistent with the motion path of the current mission.

In some embodiments, the method may further include:
after the movable platform starts to execute the current mission, obtaining the current mission parameter(s) in real time; and, in response to the determined result being that the movable platform cannot reach the destination, determining whether the movable platform is able to reach any preset alternate landing point.

In some embodiments, the method may further include:
before starting to execute the current mission, obtaining the current mission parameter(s); and
when the determined result is that the movable platform is able to reach the destination, controlling the movable platform to execute the current mission; otherwise, issuing an alarm message or suspending the current mission.

In some embodiments, the method may further include:
determining whether the state parameter(s) and/or motion environment parameter(s) of the movable platform meet the start-up conditions; and
when not, issuing an alarm message or suspending the current mission.

In some embodiments, the method may also include:
in response to the state parameter(s) and/or motion environment parameter(s) of the movable platform meeting the start-up conditions, performing the operation of obtaining the current motion parameter(s) and determining whether the movable platform is able to reach the destination of the current mission based on the current mission parameter(s), historical motion data and the remaining power energy of the movable platform.

In some embodiments, the start-up conditions may be adjusted in real time based on one or more of the following parameters: the state parameter(s) of the movable platform, the motion path parameter(s) of the mission, the load weight carried by the movable platform and/or the motion environment parameter(s).

In some embodiments, the state parameter(s) of the movable platform may include one or more of the following: the motion power of the movable platform, the deviation between the center of gravity of the load carried by the movable platform and the center of gravity of the movable platform, the vibration energy of the movable platform, or the state parameter(s) of the motor of the movable platform. The motion environment parameter(s) may include: the wind speed of the current motion environment.

The specific method of realizing motion control of the movable platform is able to refer to the description of each embodiment of the above-mentioned aerial vehicle control method, and the specific implementation principle is generally the same, which will not be repeated here.

It is not difficult to understand that the schemes described in the above-mentioned embodiments is able to be combined if there is no conflict, and they are not listed one by one in the embodiments of the present disclosure.

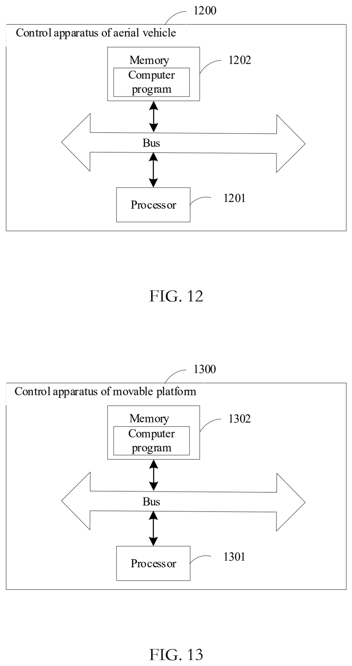

Accordingly, the embodiments of the present disclosure provides a control apparatus for an aerial vehicle. As shown in FIG. 12, the apparatus includes a processor 1201, a memory 1202, and a computer program stored in the memory 1202 for execution by the processor. When the processor 1201 executes the computer program, the apparatus may be configured to implement:
acquiring the current mission parameter(s) of the current flight mission and the historical flight data of the historical flight mission(s) related to the current mission; where the current mission parameter(s) are related to the energy consumption of the aerial vehicle, the historical flight data include the historical mission parameter(s) and the historical energy consumption in the historical flight mission(s), and the historical mission parameter(s) are related to the energy consumption of the aerial vehicle performing the historical mission(s);
acquiring the current remaining power energy of the aerial vehicle in real time; and
based on the current mission parameter(s), the historical flight data and the current remaining power energy of the aerial vehicle, determining whether the aerial vehicle is able to reach the destination of the current flight mission.

In some embodiments, the model of the aerial vehicle executing the historical flight mission(s) may be consistent with the model of the aerial vehicle executing the current flight mission; and/or
the overlap between the route of the historical flight mission(s) and the route of the current flight mission may be larger than a preset overlap; and/or
the difference between the flight environment parameter(s) of the historical flight mission(s) and the environmental parameters of the current flight mission may be less than or equal to a preset threshold; and/or
the difference between the load weight of the historical flight mission(s) and the load weight of the current flight mission may be less than or equal to a preset threshold.

In some embodiments, the processor may be also used to:
control the flight of the aerial vehicle based on the determination result.

In some embodiments, the step of the processor to control the flight of the aerial vehicle based on the determination result may include:
in response to the determination result being that the aerial vehicle cannot reach the destination, determining whether the aerial vehicle is able to reach any preset alternate landing point; and
if so, selecting a target alternate landing point from the alternate landing points that the aerial vehicle is able to reach, and controlling the aerial vehicle to land at the target alternate landing point.

In some embodiments, the preset alternate landing points may be located on the route of the current flight mission; or
the preset alternate landing points may be located near the route of the current flight mission.

In some embodiments, when the processor is used to determine whether the aerial vehicle is able to reach any preset alternate landing point, the processor may be configured to:
during the process of the aerial vehicle performing the current flight mission, perform real-time planning of the route from the current position of the aerial vehicle to each preset alternate landing point;
determine the power energy required from the current position to each alternate landing point based on the planned route; and
determine whether the aerial vehicle is able to reach each alternate landing point based on the required power energy and the remaining power energy of the aerial vehicle.

In some embodiments, when the processor is used to plan the route from the current position of the aerial vehicle to each preset alternate landing point in real time, the processor may be configured to:
for any alternate landing point, control the aerial vehicle to fly from the current position along the route of the current flight mission to the bifurcation point, and then fly from the bifurcation point to the alternate landing point, where the bifurcation point is located on the route of the current flight mission; or
for any alternate landing point, control the aerial vehicle to fly from the current position to the target point, and then fly from the target point to the alternate landing point, where the target point is located directly above the alternate landing point.

In some embodiments, when the processor is used to select the target alternate point from the alternate points that the aerial vehicle is able to reach, the processor may be configured to:
display the flight information corresponding to each reachable alternate point to the user through the control device of the aerial vehicle; and
select a target alternate point from the reachable alternate points based on the alternate point selection instruction triggered by the user.

In some embodiments, the flight information may include one or more of the following: route parameter(s) between the current position and each reachable alternate point, power energy required for the aerial vehicle to land at each reachable alternate point, or remaining power energy after the aerial vehicle lands at each reachable alternate point.

In some embodiments, the reachable alternate points include multiple points, and the processor may also be used to:
select a recommended alternate point from the multiple reachable alternate points, and display the recommended alternate point to the user through the control device of the aerial vehicle; and
when the user does not trigger the alternate point selection instruction, determine the recommended alternate point as the target alternate point.

In some embodiments, before determining whether the aerial vehicle is able to reach any preset alternate landing point, the processor may also be used to:
obtain usage information of the alternate landing point; and
obtain currently available alternate landing points from the preset alternate landing points based on the usage information.

Determining whether the aerial vehicle is able to reach any preset alternate landing point may include:
determining whether the aerial vehicle is able to reach any available alternate landing point.

In some embodiments, when it is determined that the aerial vehicle cannot reach any preset alternate landing point, a forced landing point may be determined for the aerial vehicle based on the ambient environment information of the aerial vehicle, and the aerial vehicle may be controlled to land at the forced landing point.

In some embodiments, the processor may also be used to determine the forced landing point for the aerial vehicle based on the ambient environment information of the aerial vehicle, including:
determining one or more target location points based on the ambient environment information of the aerial vehicle, where the current remaining power energy of the aerial vehicle is able to support the aerial vehicle to land at the one or more target location points; and
selecting the target location point closest to the current location of the aerial vehicle and/or the target location point with the lowest risk from the one or more target location points as the forced landing point.

In some embodiments, the processor may also be used to:
after the aerial vehicle starts to perform the current flight mission, obtain the current mission parameter(s) in real time; and, in response to the determination result being that the aerial vehicle cannot reach the destination, determine whether the aerial vehicle is able to reach any preset alternate landing point.

In some embodiments, the processor may also be used to:
before starting to execute the flight mission, obtain the current mission parameter(s); and
when the determination result is that the aerial vehicle is able to reach the destination, control the aerial vehicle to execute the current flight mission; otherwise, issue a warning message or suspend the current flight mission.

In some embodiments, when the processor is used to obtain the current mission parameter(s) before starting to execute the flight mission, the processor may be configured to:
after the aerial vehicle takes off, control the aerial vehicle to hover and obtain the current mission parameter(s) during the hovering process.

In some embodiments, the types of the current mission parameter(s) and/or the historical mission parameter(s) may include one or more of the following: flight mission route parameter(s), aerial vehicle load weight, or flight environment parameter(s).

In some embodiments, based on the current mission parameter(s), historical flight data, and the remaining power energy of the aerial vehicle, determining whether the aerial vehicle is able to reach the destination of the current flight mission may include:
based on the historical energy consumption, the historical mission parameter(s), and the current mission parameter(s), determining the estimated energy consumption of the aerial vehicle to execute the current flight mission; and
based on the estimated energy consumption and the remaining power energy of the aerial vehicle, determining whether the aerial vehicle is able to reach the destination of the current flight mission.

In some embodiments, based on the historical energy consumption, the difference or ratio between the historical mission parameter(s) and the current mission parameter(s), the estimated energy consumption of the aerial vehicle to perform the current flight mission may be determined.

Based on the estimated energy consumption and the remaining power energy of the aerial vehicle, whether the aerial vehicle is able to reach the destination of the current flight mission may be determined.

In some embodiments, in response to the increase in the difference or ratio between the current mission parameter(s) and the historical mission parameter(s), the difference between the estimated energy consumption of the aerial vehicle to complete the current flight mission and the historical energy consumption required for the historical flight mission may be increased.

In some embodiments, the historical flight data may be obtained based on the following method:
in response to the existence of a referenceable historical flight mission, the flight data of the referenceable historical flight mission may be used as the historical flight data, where the aerial vehicle performing the referenceable historical flight mission is consistent with the aerial vehicle performing the current flight mission, and the route of the referenceable historical flight mission is consistent with the route of the current flight mission.

In some embodiments, the historical flight data may be obtained based on the following method:
in response to the absence of the referenceable historical flight mission, the aerial vehicle is controlled to pre-fly according to the route of the current flight mission to obtain the historical flight data, where the aerial vehicle executing the referenceable historical flight mission is consistent with the aerial vehicle executing the current flight mission, and the route of the referenceable historical flight mission is consistent with the route of the current flight mission.

In some embodiments, the processor may also be used to:
determine whether the state parameter(s) and/or flight environment parameter(s) of the aerial vehicle before takeoff meet the flight conditions; and
when not, issue a warning message or suspend the current flight mission.

In some embodiments, the processor may also be used to:
in response to the state parameter(s) and/or flight environment parameter(s) of the aerial vehicle meeting the flight conditions, perform an operation based on the current mission parameter(s), historical flight data and the remaining power energy of the aerial vehicle to determine whether the aerial vehicle is able to reach the destination of the current flight mission.

In some embodiments, the flight conditions may be adjusted in real time based on one or more of the following parameters: the state parameter(s) of the aerial vehicle, the route parameter(s) of the flight mission, the load weight carried by the aerial vehicle, and/or the flight environment parameter(s).

In some embodiments, the state parameter(s) of the aerial vehicle may include one or more of the following: the flight power of the aerial vehicle, the deviation between the center of gravity of the load carried by the aerial vehicle and the center of gravity of the aerial vehicle, the vibration energy of the aerial vehicle, or the state parameter(s) of the motor of the aerial vehicle. The flight environment parameter(s) may include: the wind speed of the current flight environment.

In some embodiments, the processor may also be used to:
before the aerial vehicle takes off, obtain the positioning signal(s) of the positioning sensor(s) carried by the aerial vehicle;
determine the distribution of obstacles around the aerial vehicle based on the positioning signal(s) of the positioning sensor(s) carried by the aerial vehicle; and
determine whether to control the aerial vehicle to take off based on the distribution of obstacles around the aerial vehicle.

In some embodiments, when the processor is used to determine the distribution of obstacles around the aerial vehicle based on the positioning signal(s) of the positioning sensor(s) on board the aerial vehicle, the processor may be configured to:
determine the distribution of obstacles around the aerial vehicle based on the difference between the positioning signal(s) actually received by the positioning sensor(s) carried by the aerial vehicle and the positioning signal(s) that are able to be theoretically received when the aerial vehicle is at the current position.

In some embodiments, when the processor is used to determine the distribution of obstacles around the aerial vehicle according to the positioning signal(s) of the onboard positioning sensor(s) of the aerial vehicle, the processor may be configured to:
acquire obstacle information sensed by the perception sensor at the aerial vehicle; and
determine the distribution of obstacles based on the obstacle information and the positioning signal(s) of the onboard positioning sensor(s) of the aerial vehicle.

In some embodiments, when the processor is used to determine whether to control the aerial vehicle to take off based on the distribution of obstacles, the processor may be configured to:
when it is determined based on the distribution of obstacles that the solid angle ratio within the preset angle range of the pitch angle direction of the aerial vehicle is less than the preset ratio and there is no obstacle within the preset distance range of the aerial vehicle, control the aerial vehicle to take off.

In some embodiments, the processor may also be used to:
after the aerial vehicle lands, control the aerial vehicle to automatically enter a locked state, where the propeller of the aerial vehicle cannot rotate when the aerial vehicle is in a locked state;
detect whether the operation component at the aerial vehicle body is triggered by the user;
release the locked state in response to the operation component at the aerial vehicle body being triggered by the user.

In some embodiments, the processor may also be used to:
send a prompt message to the user after the aerial vehicle enters the locked state.

In some embodiments, when the aerial vehicle enters the locked state, the power apparatus of the aerial vehicle may be in the off state, and the operation component may be used to turn on the power apparatus.

Further, the embodiments of the present disclosure also provide another control apparatus for an aerial vehicle. The apparatus may include a processor, a memory, and a computer program stored in the memory for execution by the processor. When the processor executes the computer program, the processor may be configured to:
before the aerial vehicle takes off, obtain the positioning signal(s) of the positioning sensor(s) on board the aerial vehicle;
according to the positioning signal(s) of the positioning sensor(s) on board the aerial vehicle, determine the distribution of obstacles around the aerial vehicle; and
based on the distribution of obstacles around the aerial vehicle, determine whether to control the aerial vehicle to take off.

Further, the embodiments of the present disclosure also provide another control apparatus for an aerial vehicle. The apparatus may include a processor, a memory, and a computer program stored in the memory for execution by the processor. When the processor executes the computer program, the processor may be configured to:
after the aerial vehicle lands, control the aerial vehicle to automatically enter a locked state, where the propeller of the aerial vehicle cannot rotate when the aerial vehicle is in a locked state;
detect whether the operation component at the aerial vehicle body is triggered by the user; and
release the locked state in response to the operation component at the aerial vehicle body being triggered by the user.

Further, the embodiments of the present disclosure also provide a control apparatus for a movable platform. As shown in FIG. 13, the apparatus includes a processor 1301, a memory 1302, and a computer program stored in the memory 1302 for execution by the processor 1301. When the processor 1301 executes the computer program, the processor may be configured to:
obtain the current mission parameter(s) of the current mission and the historical motion data of the historical mission(s) related to the current mission, where the current mission parameter(s) are related to the energy consumption of the movable platform; the historical motion data include the historical mission parameter(s) and the historical energy consumption in the historical mission(s), and the historical mission parameter(s) are related to the energy consumption of the movable platform executing the historical mission(s);
acquiring the current remaining power energy of the movable platform in real time; and
determining whether the movable platform is able to reach the destination of the current mission based on the current mission parameter(s), the historical motion data and the remaining power energy of the movable platform.

In some embodiments, the model of the movable platform executing the historical mission(s) may be consistent with the model of the movable platform executing the current mission; and/or
the overlap between the motion path of the historical mission(s) and the motion path of the current mission may be greater than a preset overlap; and/or
the difference between the motion environment parameter of the historical mission(s) and the motion environment parameter of the current mission may be less than or equal to a preset threshold; and/or
the difference between the load weight of the historical mission(s) and the load weight of the current mission may be less than or equal to a preset threshold.

In some embodiments, the processor may also be used to:
control the motion of the movable platform based on the determination result.

In some embodiments, the types of the current mission parameter(s) and/or the historical mission parameter(s) may include one or more of the following: mission motion path parameter(s), load weight carried by the movable platform, or motion environment parameter(s).

In some embodiments, based on the current mission parameter(s), historical motion data, and the remaining power energy of the movable platform, determining whether the movable platform is able to reach the destination of the current mission may include:
determining the estimated energy consumption of the movable platform for performing the current mission based on the historical energy consumption, the historical mission parameter(s), and the current mission parameter(s);
determining whether the movable platform is able to reach the destination of the current mission based on the estimated energy consumption and the remaining power energy of the movable platform.

In some embodiments, the estimated energy consumption of the movable platform for performing the current mission may be determined based on the historical energy consumption, the difference or ratio between the historical mission parameter(s) and the current mission parameter(s).

Whether the movable platform is able to reach the destination of the current mission may be determined based on the estimated energy consumption and the remaining power energy of the movable platform.

In some embodiments, in response to an increase in the difference or ratio between the current mission parameter(s) and the historical mission parameter(s), the difference between the estimated energy consumption of the movable platform for completing the current mission and the historical energy consumption required for the historical mission(s) may increase.

In some embodiments, the historical motion data may be obtained based on the following method:
in response to the existence of a referenceable historical mission, the motion data of the referenceable historical mission is used as the historical motion data; where: the movable platform that executes the referenceable historical mission is the same model as the movable platform that executes the current mission, and the motion path of the referenceable historical mission is consistent with the motion path of the current mission.

In some embodiments, the historical motion data may be obtained based on the following method:
in response to the absence of the referenceable historical mission, the movable platform is controlled to pre-move according to the motion path of the current mission to obtain the historical motion data, where the movable platform that executes the referenceable historical mission is the same model as the movable platform that executes the current mission, and the motion path of the referenceable historical mission is consistent with the motion path of the current mission.

In some embodiments, the processor may also be used to:
after the movable platform starts to execute the current mission, obtain the current mission parameter(s) in real time; and, in response to the determination result being that the movable platform cannot reach the destination, determine whether the movable platform is able to reach any preset alternate landing point.

In some embodiments, the processor may also be used to:
before starting to execute the current mission, obtain the current mission parameter(s);
when the determination result is that the movable platform is able to reach the destination, control the movable platform to execute the current mission; otherwise, issue an alarm message or suspend the current mission.

In some embodiments, the processor may also be used to:
determine whether the state parameter(s) and/or motion environment parameter(s) of the movable platform meet the start-up conditions; and
when not, issue an alarm message or suspend the current mission.

In some embodiments, the processor may also be used to:
in response to the state parameter(s) and/or motion environment parameter(s) of the movable platform meeting the start-up conditions, perform the operation of obtaining the current motion parameter(s) and determining whether the movable platform is able to reach the destination of the current mission based on the current mission parameter(s), historical motion data and the remaining power energy of the movable platform.

In some embodiments, the start-up conditions may be adjusted in real time based on one or more of the following parameters: the state parameter(s) of the movable platform, the motion path parameter(s) of the mission, the load weight carried by the movable platform and/or the motion environment parameter(s).

The specific details of the control apparatus of the above-mentioned movable platform for controlling the movement of the movable platform is able to be referred to the description in the above-mentioned method embodiments, which will not be repeated here.

Correspondingly, the present disclosure further provides a computer storage medium, in which a program is stored. When the program is executed by a processor, the method in any of the above embodiments is implemented.

The embodiments of the present disclosure may take the form of a computer program product implemented on one or more storage media (including but not limited to disk storage, CD-ROM, optical storage, etc.) containing program code. Computer-usable storage media may include permanent or non-permanent, removable or non-removable media. Information storage may be implemented by any method or technology. Information may be computer-readable instructions, data structures, modules of programs, or other data. Examples of computer storage media include but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, read-only compact disk read-only memory (CD-ROM), digital versatile disk (DVD) or other optical storage, magnetic cassettes, magnetic tape, magnetic disk storage or other magnetic storage devices, or any other non-transmission media that is able to be used to store information that is able to be accessed by a computing device.

For the apparatus embodiments, since they basically correspond to the method embodiments, the relevant parts are able to be referred to the partial description of the method embodiments. The device embodiments described above are merely illustrative, where the units described as separate components may or may not be physically separated, and the components displayed as units may or may not be physical units, that is, they may be located in one place, or they may be distributed on multiple network units. Some or all of the modules may be selected according to actual needs to achieve the purpose of the scheme of this embodiments. Those ordinary skilled in the art are able to understand and implement it without creative work.

It should be noted that, in the present disclosure, relational terms such as first and second are only used to distinguish one entity or operation from another entity or operation, and do not necessarily require or imply any such actual relationship or order between these entities or operations. The terms such as "include," comprise," or any other variant thereof are intended to cover non-exclusive inclusion, so that a process, method, article or device including a series of elements includes not only those elements, but also other elements not explicitly listed, or also includes elements inherent to such process, method, article or device. In the absence of further restrictions, the elements associated with the phrase "including one..." do not exclude the existence of other identical elements in the process, method, article or device including the elements.

The method and device provided in the embodiments of the present disclosure are introduced in detail above. Specific examples are used in the present disclosure to illustrate the principles and implementation methods of the present disclosure. The description of the above embodiments is only used to help understand the method of the present disclosure and its core idea. For those skilled in the art, according to the idea of the present disclosure, there will be changes in the specific implementation methods and application scopes. In summary, the content of this specification should not be understood as limiting the present disclosure.

## Claims

1. A control method of an aerial vehicle, comprising:
obtaining current mission parameter(s) of a current flight mission and historical flight data of historical flight mission(s) related to the current mission, wherein: the current mission parameter(s) are related to the energy consumption of the aerial vehicle, the historical flight data include historical mission parameter(s) and historical energy consumption in the historical flight mission(s), and the historical mission parameter(s) are related to the energy consumption of the aerial vehicle performing the historical mission(s);
obtaining current remaining power energy of the aerial vehicle in real time; and
determining whether the aerial vehicle is able to reach the destination of the current flight mission based on the current mission parameter(s), the historical flight data, and the current remaining power energy of the aerial vehicle.

2. The method according to claim 1, wherein:
a model of the aerial vehicle that performed the historical flight mission(s) is consistent with the model of the aerial vehicle that performs the current flight mission; and/or
the overlap between the routes of the historical flight mission(s) and the route of the current flight mission is larger than a preset overlap; and/or
the difference between the flight environment parameter(s) of the historical flight mission(s) and the flight environment parameter(s) of the current flight mission is less than or equal to a preset threshold; and/or
the difference between the load weight of the historical flight mission(s) and the load weight of the current flight mission is less than or equal to a preset threshold.

3. The method according to claim 1, further comprising:
performing flight control on the aerial vehicle based on the determination result.

4. The method according to claim 3, wherein performing the flight control on the aerial vehicle based on the determination result includes:
in response to the determination result being that the aerial vehicle cannot reach the destination, determining whether the aerial vehicle is able to reach any preset alternate landing point; and
if so, selecting a target alternate landing point from alternate landing points that the aerial vehicle is able to reach, and controlling the aerial vehicle to land at the target alternate landing point.

5. The method according to claim 4, wherein:
the preset alternate landing points are located on the route of the current flight mission; or
the preset alternate landing points are located near the route of the current flight mission.

6. The method according to claim 4, wherein determining whether the aerial vehicle is able to reach any preset alternate landing point includes:
when the aerial vehicle is performing the current flight mission, planning a route from the current position of the aerial vehicle to each preset alternate landing point in real time;
determining the power energy required to travel from the current position to each alternate landing point based on the planned route; and
determining whether the aerial vehicle is able to reach each alternate landing point based on the required power energy and the remaining power energy of the aerial vehicle.

7. The method according to claim 6, wherein planning the route from the current position of the aerial vehicle to each preset alternate landing point in real time includes:
for any alternate landing point, controlling the aerial vehicle to fly from the current position to a bifurcation point along the route of the current flight mission, and then fly from the bifurcation point to the alternate landing point, wherein the bifurcation point is located on the route of the current flight mission; or
for any alternate landing point, controlling the aerial vehicle to fly from the current position to a target point, and then fly from the target point to the alternate landing point, wherein the target point is located directly above the alternate landing point.

8. The method according to claim 4, wherein selecting the target alternate landing point from the alternate landing points that the aerial vehicle is able to reach includes:
displaying flight information corresponding to each accessible alternate landing point to the user through a control device of the aerial vehicle; and
selecting the target alternate landing point from the accessible alternate landing points based on an alternate landing point selection instruction triggered by the user.

9. The method according to claim 8, wherein the flight information includes one or more of: route parameter(s) between the current position and each accessible alternate landing point, power energy required for the aerial vehicle to land at each accessible alternate landing point, or the remaining power energy after the aerial vehicle lands at each accessible alternate landing point.

10. The method according to claim 8, wherein:
the accessible alternate landing points are multiple; and
the method further includes:
selecting a recommended alternate landing point from the multiple accessible alternate landing points, and displaying the recommended alternate landing point to the user through the control device of the aerial vehicle; and
when the user does not trigger the alternate landing point selection instruction, determining the recommended alternate landing point as the target alternate landing point.

11. The method according to claim 4, before determining whether the aerial vehicle is able to reach any preset alternate landing point, further comprising:
obtaining usage information of alternate landing points; and
obtaining currently available alternate landing points from the preset alternate landing points based on the usage information,
wherein determining whether the aerial vehicle is able to reach any preset alternate landing point includes:
determining whether the aerial vehicle is able to reach any available alternate landing point.

12. The method according to claim 4, further comprising:
when it is determined that the aerial vehicle cannot reach any preset alternate landing point, determining a forced landing point for the aerial vehicle based on the surrounding environment information of the aerial vehicle, and controlling the aerial vehicle to land at the forced landing point.

13. The method according to claim 12, wherein determining the forced landing point for the aerial vehicle based on the surrounding environment information of the aerial vehicle includes:
based on the surrounding environment information of the aerial vehicle, determining one or more target position points, wherein the current remaining power energy of the aerial vehicle is able to support the aerial vehicle to land at the one or more target position points; and
selecting one target position point closest to the current position of the aerial vehicle and/or one target position point with the lowest risk from the one or more target position points as the forced landing point.

14. The method according to any one of claims 1 to 13, further comprising:
after the aerial vehicle starts to execute the current flight mission, obtaining the current mission parameter(s) in real time; and, in response to the determination result being that the aerial vehicle cannot reach the destination, determining whether the aerial vehicle is able to reach any preset alternate landing point.

15. The method according to claim 14, further comprising:
before starting to execute the flight mission, obtaining the current mission parameter(s); and
when the determination result is that the aerial vehicle is able to reach the destination, controlling the aerial vehicle to execute the current flight mission; and, otherwise, issuing an alarm message or suspending the current flight mission.

16. The method according to claim 14, wherein before starting to execute the flight mission, obtaining the current mission parameter(s) includes:
after the aerial vehicle takes off, controlling the aerial vehicle to hover, and obtaining the current mission parameter(s) during the hovering process.

17. The method according to claim 1, wherein types of the current mission parameter(s) and/or the historical mission parameter(s) include one or more of: flight mission route parameter(s), load weight carried by the aerial vehicle, or flight environment parameter(s).

18. The method according to claim 1, wherein based on the current mission parameter(s), the historical flight data and the remaining power energy of the aerial vehicle, determining whether the aerial vehicle is able to reach the destination of the current flight mission, includes:
determining the estimated energy consumption of the aerial vehicle to perform the current flight mission based on the historical energy consumption, the historical mission parameter(s) and the current mission parameter(s); and
based on the estimated energy consumption and the remaining power energy of the aerial vehicle, determining whether the aerial vehicle is able to reach the destination of the current flight mission.

19. The method according to claim 18, wherein:
based on the historical energy consumption, the difference or ratio between the historical mission parameter(s) and the current mission parameter(s), the estimated energy consumption of the aerial vehicle to perform the current flight mission is determined; and
based on the estimated energy consumption and the remaining power energy of the aerial vehicle, whether the aerial vehicle is able to reach the destination of the current flight mission is determined.

20. The method according to claim 18, wherein in response to the increase in the difference or ratio between the current mission parameter(s) and the historical mission parameter(s), the difference between the estimated energy consumption of the aerial vehicle to complete the current flight mission and the historical energy consumption required for the historical flight mission increases.

21. The method according to claim 1, wherein the historical flight data is obtained by:
in response to the existence of a referenceable historical flight mission, using the flight data of the referenceable historical flight mission as the historical flight data, wherein: the model of the aerial vehicle that executes the referenceable historical flight mission is consistent with the model of the aerial vehicle that executes the current flight mission, and the route of the referenceable historical flight mission is consistent with the route of the current flight mission.

22. The method according to claim 1, wherein the historical flight data is obtained by:
in response to the absence of a referenceable historical flight mission, controlling the aerial vehicle to pre-fly according to the route of the current flight mission to obtain the historical flight data, wherein: the model of the aerial vehicle that executes the referenceable historical flight mission is consistent with the model of the aerial vehicle that executes the current flight mission, and the route of the referenceable historical flight mission is consistent with the route of the current flight mission.

23. The method according to claim 1, further comprising:
determining whether the state parameter(s) and/or flight environment parameter(s) of the aerial vehicle before takeoff meet flight conditions; and
if not, issuing a warning message or suspending the current flight mission.

24. The method according to claim 23, further comprising:
in response to the state parameter(s) and/or flight environment parameter(s) of the aerial vehicle meeting the flight conditions, performing the operation to determine whether the aerial vehicle is able to reach the destination of the current flight mission based on the current mission parameter(s), the historical flight data and the remaining power energy of the aerial vehicle.

25. The method according to claim 23, wherein the flight conditions are adjusted in real time based on one or more of parameters including: the state parameter(s) of the aerial vehicle, the route parameter(s) of the flight mission, a load weight carried by the aerial vehicle, and/or a flight environment parameter(s).

26. The method according to claim 25, wherein the state parameter(s) of the aerial vehicle include one or more of: the flight power of the aerial vehicle, the deviation between the center of gravity of the load carried by the aerial vehicle and the center of gravity of the aerial vehicle, the vibration energy of the aerial vehicle, or the state parameter(s) of the aerial vehicle's motor; and the flight environment parameter(s) include the wind speed of the current flight environment.

27. The method according to claim 1, further comprising:
before the aerial vehicle takes off, obtaining positioning signal(s) of positioning sensor(s) carried by the aerial vehicle;
determining distribution of obstacles around the aerial vehicle based on the positioning signal(s) of the positioning sensor(s) carried by the aerial vehicle; and
based on the distribution of obstacles around the aerial vehicle, determining whether to control the aerial vehicle to take off.

28. The method according to claim 1, wherein determining the distribution of obstacles around the aerial vehicle based on the positioning signal(s) of the positioning sensor(s) carried by the aerial vehicle includes:
based on the difference between the positioning signal(s) actually received by the positioning sensor(s) carried by the aerial vehicle and the positioning signal(s) that are able to be theoretically received when the aerial vehicle is at the current position, determining the distribution of obstacles around the aerial vehicle.

29. The method according to claim 27, wherein determining the distribution of obstacles around the aerial vehicle based on the positioning signal(s) of the positioning sensor(s) carried by the aerial vehicle includes:
obtaining obstacle information sensed by a perception sensor at the aerial vehicle; and
determining the distribution of obstacles based on the obstacle information and the positioning signal(s) of the positioning sensor(s) carried by the aerial vehicle.

30. The method according to claim 29, wherein based on the distribution of obstacles around the aerial vehicle, determining whether to control the aerial vehicle to take off includes:
when it is determined based on the distribution of obstacles that a solid angle ratio within the preset angle range of the pitch angle direction of the aerial vehicle is less than a preset ratio and there is no obstacle within the preset distance range of the aerial vehicle, controlling the aerial vehicle to take off.

31. The method according to claim 1, further comprising:
after the aerial vehicle lands, controlling the aerial vehicle to automatically enter a locked state, wherein propellers of the aerial vehicle cannot rotate when the aerial vehicle is in the locked state;
detecting whether an operation component at the body of the aerial vehicle is triggered by a user; and
in response to the operation component at the body of the aerial vehicle being triggered by the user, releasing the locked state.

32. The method according to claim 31, further comprising:
after the aerial vehicle enters the locked state, sending a prompt message to the user.

33. The method according to claim 31, wherein when the aerial vehicle enters the locked state, the power apparatus of the aerial vehicle is in an off state, and the operation component is used to turn on the power apparatus.

34. A control method of an aerial vehicle, comprising:
before the aerial vehicle takes off, obtaining positioning signal(s) of positioning sensor(s) carried by the aerial vehicle;
determining distribution of obstacles around the aerial vehicle based on the positioning signal(s) of the positioning sensor(s) carried by the aerial vehicle; and
based on the distribution of obstacles around the aerial vehicle, determining whether to control the aerial vehicle to take off.

35. A control method of an aerial vehicle, comprising:
after the aerial vehicle lands, controlling the aerial vehicle to automatically enter a locked state, wherein propellers of the aerial vehicle cannot rotate when the aerial vehicle is in the locked state;
detecting whether an operation component at the body of the aerial vehicle is triggered by a user; and
in response to the operation component at the body of the aerial vehicle being triggered by the user, releasing the locked state.

36. A control method of a movable platform, comprising:
obtaining current mission parameter(s) of a current mission and historical motion data of historical mission(s) related to the current mission, wherein: the current mission parameter(s) are related to the energy consumption of the movable platform, the historical motion data include historical mission parameter(s) and historical energy consumption in the historical mission(s), and the historical mission parameter(s) are related to the energy consumption of the movable platform performing the historical mission(s);
obtaining current remaining power energy of the movable platform in real time; and
determining whether the movable platform is able to reach the destination of the current mission based on the current mission parameter(s), the historical motion data and the current remaining power energy of the movable platform.

37. The method according to claim 36, wherein:
a model of the movable platform that performed the historical mission(s) is consistent with the model of the movable platform that performs the current mission; and/or
the overlap between the motion route of the historical mission and the motion route of the current mission is larger than a preset overlap; and/or
the difference between the motion environment parameter(s) of the historical mission(s) and the motion environment parameter(s) of the current mission is less than or equal to a preset threshold; and/or
the difference between the load weight of the historical mission(s) and the load weight of the current mission is less than or equal to a preset threshold.

38. The method according to claim 36, further comprising:
performing motion control on the movable platform based on the determination result.

39. The method according to claim 36, wherein types of the current mission parameter(s) and/or the historical mission parameter(s) include one or more of: motion route parameter(s) of the mission, load weight carried by the movable platform, or motion environment parameter(s).

40. The method according to claim 36, wherein based on the current mission parameter(s), the historical motion data and the remaining power energy of the movable platform, determining whether the movable platform is able to reach the destination of the current mission, includes:
determining the estimated energy consumption of the movable platform to perform the current mission based on the historical energy consumption, the historical mission parameter(s) and the current mission parameter(s); and
based on the estimated energy consumption and the remaining power energy of the movable platform, determining whether the movable platform is able to reach the destination of the current mission.

41. The method according to claim 40, wherein:
based on the historical energy consumption, the difference or ratio between the historical mission parameter(s) and the current mission parameter(s), the estimated energy consumption of the movable platform to perform the current mission is determined; and
based on the estimated energy consumption and the remaining power energy of the movable platform, whether the movable platform is able to reach the destination of the current mission is determined.

42. The method according to claim 40, wherein in response to the increase in the difference or ratio between the current mission parameter(s) and the historical mission parameter(s), the difference between the estimated energy consumption of the movable platform to complete the current mission and the historical energy consumption required for the historical mission increases.

43. The method according to claim 36, wherein the historical motion data is obtained by:
in response to the existence of a referenceable historical mission, using the motion data of the referenceable historical mission as the historical motion data, wherein: the model of the movable platform that executes the referenceable historical mission is consistent with the model of the movable platform that executes the current mission, and the motion route of the referenceable historical mission is consistent with the motion route of the current mission.

44. The method according to claim 36, wherein the historical motion data is obtained by:
in response to the absence of a referenceable historical mission, controlling the movable platform to pre-move according to the route of the current mission to obtain the historical motion data, wherein: the model of the movable platform that executes the referenceable historical mission is consistent with the model of the movable platform that executes the current mission, and the motion route of the referenceable historical mission is consistent with the motion route of the current mission.

45. The method according to any one of claims 36 to 44, further comprising:
after the movable platform starts to execute the current mission, obtaining the current mission parameter(s) in real time, and, in response to the determination result being that the movable platform cannot reach the destination, determining whether the movable platform is able to reach any preset alternate landing point.

46. The method according to claim 45, further comprising:
before starting to execute the current mission, obtaining the current mission parameter(s); and
when the judgment result is that the movable platform is able to reach the destination, controlling the movable platform to execute the current mission; otherwise, issuing an alarm message or suspending the current mission.

47. The method according to claim 35, further comprising:
determining whether the state parameter(s) and/or motion environment parameter(s) of the movable platform meet start-up conditions; and
when the state parameter(s) and/or motion environment parameter(s) of the movable platform do not meet the start-up conditions, issuing a warning message or suspending the current mission.

48. The method according to claim 47, further comprising:
in response to the state parameter(s) and/or motion environment parameter(s) of the movable platform meeting the start-up conditions, performing the operation to obtain current motion parameter(s) and determine whether the movable platform is able to reach the destination of the current mission based on the current mission parameter(s), the historical motion data and the remaining power energy of the movable platform.

49. The method according to claim 47, wherein the start-up conditions are adjusted in real time based on one or more of parameters including: the state parameter(s) of the movable platform, the motion route parameter(s) of the mission, a load weight carried by the movable platform, and/or the motion environment parameter(s).

50. The method according to claim 49, wherein the state parameter(s) of the movable platform include one or more of: the motion power of the movable platform, the deviation between the center of gravity of the load carried by the movable platform and the center of gravity of the movable platform, the vibration energy of the movable platform, or the state parameter(s) of the movable platform's motor; and the motion environment parameter(s) include the wind speed of the current motion environment.

51. A control apparatus of an aerial vehicle, comprising a processor, a memory, and a computer program stored in the memory for execution by the processor, wherein when executing the computer program, the processor is configured to perform:
obtaining current mission parameter(s) of a current flight mission and historical flight data of historical flight mission(s) related to the current mission; wherein: the current mission parameter(s) are related to the energy consumption of the aerial vehicle, the historical flight data include historical mission parameter(s) and historical energy consumption in the historical flight mission(s), and the historical mission parameter(s) are related to the energy consumption of the aerial vehicle performing the historical mission(s);
obtaining current remaining power energy of the aerial vehicle in real time; and
determining whether the aerial vehicle is able to reach the destination of the current flight mission based on the current mission parameter(s), the historical flight data and the current remaining power energy of the aerial vehicle.

52. The apparatus according to claim 51, wherein:
a model of the aerial vehicle that performed the historical flight mission(s) is consistent with the model of the aerial vehicle that performs the current flight mission; and/or
the overlap between the route of the historical flight mission and the route of the current flight mission is larger than a preset overlap; and/or
the difference between the flight environment parameter(s) of the historical flight mission(s) and the flight environment parameter(s) of the current flight mission is less than or equal to a preset threshold; and/or
the difference between the load weight of the historical flight mission(s) and the load weight of the current flight mission is less than or equal to a preset threshold.

53. The apparatus according to claim 51, wherein the processor is further configured to:
perform flight control on the aerial vehicle based on the determination result.

54. The apparatus according to claim 53, wherein:
when the processor is configured to perform the flight control on the aerial vehicle based on the determination result, the processor is used to:
in response to the determination result being that the aerial vehicle cannot reach the destination, determine whether the aerial vehicle is able to reach any preset alternate landing point; and
if so, select a target alternate landing point from alternate landing points that the aerial vehicle is able to reach, and control the aerial vehicle to land at the target alternate landing point.

55. The apparatus according to claim 54, wherein:
the preset alternate landing points are located on the route of the current flight mission; or
the preset alternate landing points are located near the route of the current flight mission.

56. The apparatus according to claim 55, wherein, when the processor is configured to determine whether the aerial vehicle is able to reach any preset alternate landing point, the processor is configured to:
when the aerial vehicle is performing the current flight mission, plan a route from the current position of the aerial vehicle to each preset alternate landing point in real time;
determine the power energy required to travel from the current position to each alternate landing point based on the planned route; and
determine whether the aerial vehicle is able to reach each alternate landing point based on the required power energy and the remaining power energy of the aerial vehicle.

57. The apparatus according to claim 56, wherein when the processor is configured to plan the route from the current position of the aerial vehicle to each preset alternate landing point in real time, the processor is configured to:
for any alternate landing point, control the aerial vehicle to fly from the current position to a bifurcation point along the route of the current flight mission, and then fly from the bifurcation point to the alternate landing point, wherein the bifurcation point is located on the route of the current flight mission; or
for any alternate landing point, control the aerial vehicle to fly from the current position to a target point, and then fly from the target point to the alternate landing point, wherein the target point is located directly above the alternate landing point.

58. The apparatus according to claim 54, wherein when the processor is configured to select the target alternate landing point from the alternate landing points that the aerial vehicle is able to reach, the processor is configured to:
display flight information corresponding to each accessible alternate landing point to the user through a control device of the aerial vehicle; and
select the target alternate landing point from the accessible alternate landing points based on an alternate landing point selection instruction triggered by the user.

59. The apparatus according to claim 58, wherein the flight information includes one or more of: route parameter(s) between the current position and each accessible alternate landing point, power energy required for the aerial vehicle to land at each accessible alternate landing point, or the remaining power energy after the aerial vehicle lands at each accessible alternate landing point.

60. The apparatus according to claim 58, wherein:
the accessible alternate landing points are multiple; and
the processor is further configured to:
select a recommended alternate landing point from the multiple accessible alternate landing points, and displaying the recommended alternate landing point to the user through the control device of the aerial vehicle; and
when the user does not trigger the alternate landing point selection instruction, determine the recommended alternate landing point as the target alternate landing point.

61. The apparatus according to claim 54, wherein before determining whether the aerial vehicle is able to reach any preset alternate landing point, the processor is further configured to:
obtain usage information of alternate landing points; and
obtain currently available alternate landing points from the preset alternate landing points based on the usage information,
wherein determining whether the aerial vehicle is able to reach any preset alternate landing point includes:
determining whether the aerial vehicle is able to reach any available alternate landing point.

62. The apparatus according to claim 54, wherein when it is determined that the aerial vehicle cannot reach any preset alternate landing point, a forced landing point for the aerial vehicle is determined based on the surrounding environment information of the aerial vehicle, and the aerial vehicle is controlled to land at the forced landing point.

63. The apparatus according to claim 62, wherein when the processor is configured to determine the forced landing point for the aerial vehicle based on the surrounding environment information of the aerial vehicle, the processor is configured to:
based on the surrounding environment information of the aerial vehicle, determine one or more target position points, wherein the current remaining power energy of the aerial vehicle is able to support the aerial vehicle to land at the one or more target position points; and
select one target position point closest to the current position of the aerial vehicle and/or one target position point with the lowest risk from the one or more target position points as the forced landing point.

64. The method according to any one of claims 1 to 63, wherein the processor is further configured to:
after the aerial vehicle starts to execute the current flight mission, obtain the current mission parameter(s) in real time; and in response to the determination result being that the aerial vehicle cannot reach the destination, determine whether the aerial vehicle is able to reach any preset alternate landing point.

65. The apparatus according to claim 64, wherein the processor is further configured to:
before starting to execute the flight mission, obtain the current mission parameter(s); and
when the determination result is that the aerial vehicle is able to reach the destination, control the aerial vehicle to execute the current flight mission; otherwise, issue an alarm message or suspend the current flight mission.

66. The apparatus according to claim 64, wherein, before starting to execute the flight mission, when the processor is configured to obtain the current mission parameter(s), the processor is configured to:
after the aerial vehicle takes off, control the aerial vehicle to hover, and obtain the current mission parameter(s) during the hovering process.

67. The apparatus according to claim 1, wherein types of the current mission parameter(s) and/or the historical mission parameter(s) include one or more of: flight mission route parameter(s), load weight carried by the aerial vehicle, or flight environment parameter(s).

68. The apparatus according to claim 1, wherein based on the current mission parameter(s), the historical flight data and the remaining power energy of the aerial vehicle, determining whether the aerial vehicle is able to reach the destination of the current flight mission, includes:
determining the estimated energy consumption of the aerial vehicle to perform the current flight mission based on the historical energy consumption, the historical mission parameter(s) and the current mission parameter(s); and
based on the estimated energy consumption and the remaining power energy of the aerial vehicle, determining whether the aerial vehicle is able to reach the destination of the current flight mission.

69. The apparatus according to claim 68, wherein:
based on the historical energy consumption, the difference or ratio between the historical mission parameter(s) and the current mission parameter(s), the estimated energy consumption of the aerial vehicle to perform the current flight mission is determined; and
based on the estimated energy consumption and the remaining power energy of the aerial vehicle, whether the aerial vehicle is able to reach the destination of the current flight mission is determined.

70. The apparatus according to claim 68, wherein in response to the increase in the difference or ratio between the current mission parameter(s) and the historical mission parameter(s), the difference between the estimated energy consumption of the aerial vehicle to complete the current flight mission and the historical energy consumption required for the historical flight mission increases.

71. The apparatus according to claim 1, wherein the historical flight data is obtained by:
in response to the existence of a referenceable historical flight mission, using the flight data of the referenceable historical flight mission as the historical flight data, wherein: the model of the aerial vehicle that executes the referenceable historical flight mission is consistent with the model of the aerial vehicle that executes the current flight mission, and the route of the referenceable historical flight mission is consistent with the route of the current flight mission.

72. The apparatus according to claim 1, wherein the historical flight data is obtained by:
in response to the absence of a referenceable historical flight mission, controlling the aerial vehicle to pre-fly according to the route of the current flight mission to obtain the historical flight data, wherein: the model of the aerial vehicle that executes the referenceable historical flight mission is consistent with the model of the aerial vehicle that executes the current flight mission, and the route of the referenceable historical flight mission is consistent with the route of the current flight mission.

73. The apparatus according to claim 1, wherein the processor is further configured to:
determine whether the state parameter(s) and/or flight environment parameter(s) of the aerial vehicle before takeoff meet flight conditions; and
if not, issue a warning message or suspend the current flight mission.

74. The apparatus according to claim 73, wherein the processor is further configured to:
in response to the state parameter(s) and/or flight environment parameter(s) of the aerial vehicle meeting the flight conditions, perform the operation to determine whether the aerial vehicle is able to reach the destination of the current flight mission based on the current mission parameter(s), the historical flight data and the remaining power energy of the aerial vehicle.

75. The apparatus according to claim 73, wherein the flight conditions are adjusted in real time based on one or more of parameters including: the state parameter(s) of the aerial vehicle, the route parameter(s) of the flight mission, a load weight carried by the aerial vehicle, and/or a flight environment parameter(s).

76. The apparatus according to claim 75, wherein the state parameter(s) of the aerial vehicle include one or more of: the flight power of the aerial vehicle, the deviation between the center of gravity of the load carried by the aerial vehicle and the center of gravity of the aerial vehicle, the vibration energy of the aerial vehicle, or the state parameter(s) of the aerial vehicle's motor; and the flight environment parameter(s) include the wind speed of the current flight environment.

77. The apparatus according to claim 1, wherein the processor is further configured to:
before the aerial vehicle takes off, obtain positioning signal(s) of positioning sensor(s) carried by the aerial vehicle;
determine distribution of obstacles around the aerial vehicle based on the positioning signal(s) of the positioning sensor(s) carried by the aerial vehicle; and
based on the distribution of obstacles around the aerial vehicle, determine whether to control the aerial vehicle to take off.

78. The apparatus according to claim 1, wherein, when the processor is configured to determine the distribution of obstacles around the aerial vehicle based on the positioning signal(s) of the positioning sensor(s) carried by the aerial vehicle, the processor is configured to:
based on the difference between the positioning signal(s) actually received by the positioning sensor(s) carried by the aerial vehicle and the positioning signal(s) that are able to be theoretically received when the aerial vehicle is at the current position, determine the distribution of obstacles around the aerial vehicle.

79. The apparatus according to claim 77, wherein when the processor is configured to determine the distribution of obstacles around the aerial vehicle based on the positioning signal(s) of the positioning sensor(s) carried by the aerial vehicle, the processor is configured to:
obtain obstacle information sensed by a perception sensor at the aerial vehicle; and
determine the distribution of obstacles based on the obstacle information and the positioning signal(s) of the positioning sensor(s) carried by the aerial vehicle.

80. The apparatus according to claim 79, wherein:
when the processor is configured to determine whether to control the aerial vehicle to take off based on the distribution of obstacles around the aerial vehicle, the processor is configured to:
when it is determined based on the distribution of obstacles that a solid angle ratio within the preset angle range of the pitch angle direction of the aerial vehicle is less than a preset ratio and there is no obstacle within the preset distance range of the aerial vehicle, control the aerial vehicle to take off.

81. The apparatus according to claim 1, wherein the processor is further configured to:
after the aerial vehicle lands, control the aerial vehicle to automatically enter a locked state, wherein propellers of the aerial vehicle cannot rotate when the aerial vehicle is in the locked state;
detect whether an operation component at the body of the aerial vehicle is triggered by a user; and
in response to the operation component at the body of the aerial vehicle being triggered by the user, release the locked state.

82. The apparatus according to claim 81, wherein the processor is further configured to:
after the aerial vehicle enters the locked state, sending a prompt message to the user.

83. The apparatus according to claim 81, wherein:
when the aerial vehicle enters the locked state, the power apparatus of the aerial vehicle is in an off state, and the operation component is used to turn on the power apparatus.

84. A control apparatus of an aerial vehicle, comprising a processor, a memory, and a computer program stored in the memory for execution by the processor, wherein when executing the computer program, the processor is configured to perform:
before the aerial vehicle takes off, obtaining positioning signal(s) of positioning sensor(s) carried by the aerial vehicle;
determining distribution of obstacles around the aerial vehicle based on the positioning signal(s) of the positioning sensor(s) carried by the aerial vehicle; and
based on the distribution of obstacles around the aerial vehicle, determining whether to control the aerial vehicle to take off.

85. A control apparatus of an aerial vehicle, comprising a processor, a memory, and a computer program stored in the memory for execution by the processor, wherein when executing the computer program, the processor is configured to perform:
after the aerial vehicle lands, controlling the aerial vehicle to automatically enter a locked state, wherein propellers of the aerial vehicle cannot rotate when the aerial vehicle is in the locked state;
detecting whether an operation component at the body of the aerial vehicle is triggered by a user; and
in response to the operation component at the body of the aerial vehicle being triggered by the user, releasing the locked state.

86. A control apparatus of a movable platform, comprising a processor, a memory, and a computer program stored in the memory for execution by the processor, wherein when executing the computer program, the processor is configured to perform:
obtaining current mission parameter(s) of a current mission and historical motion data of historical mission(s) related to the current mission, wherein: the current mission parameter(s) are related to the energy consumption of the movable platform, the historical motion data include historical mission parameter(s) and historical energy consumption in the historical mission(s), and the historical mission parameter(s) are related to the energy consumption of the movable platform performing the historical mission(s);
obtaining current remaining power energy of the movable platform in real time; and
determining whether the movable platform is able to reach the destination of the current mission based on the current mission parameter(s), the historical motion data and the current remaining power energy of the movable platform.

87. The apparatus according to claim 86, wherein:
a model of the movable platform that performed the historical mission(s) is consistent with the model of the movable platform that performs the current mission; and/or
the overlap between the motion route of the historical mission and the motion route of the current mission is larger than a preset overlap; and/or
the difference between the motion environment parameter(s) of the historical mission(s) and the motion environment parameter(s) of the current mission is less than or equal to a preset threshold; and/or
the difference between the load weight of the historical mission(s) and the load weight of the current mission is less than or equal to a preset threshold.

88. The apparatus according to claim 86, wherein the processor is further configured to:
perform motion control on the movable platform based on the determination result.

89. The apparatus according to claim 86, wherein types of the current mission parameter(s) and/or the historical mission parameter(s) include one or more of: motion route parameter(s) of the mission, load weight carried by the movable platform, or motion environment parameter(s).

90. The apparatus according to claim 86, wherein based on the current mission parameter(s), the historical motion data and the remaining power energy of the movable platform, determining whether the movable platform is able to reach the destination of the current mission, includes:
determining the estimated energy consumption of the movable platform to perform the current mission based on the historical energy consumption, the historical mission parameter(s) and the current mission parameter(s); and
based on the estimated energy consumption and the remaining power energy of the movable platform, determining whether the movable platform is able to reach the destination of the current mission.

91. The apparatus according to claim 90, wherein:
based on the historical energy consumption, the difference or ratio between the historical mission parameter(s) and the current mission parameter(s), the estimated energy consumption of the movable platform to perform the current mission is determined; and
based on the estimated energy consumption and the remaining power energy of the movable platform, whether the movable platform is able to reach the destination of the current mission is determined.

92. The apparatus according to claim 90, wherein in response to the increase in the difference or ratio between the current mission parameter(s) and the historical mission parameter(s), the difference between the estimated energy consumption of the movable platform to complete the current mission and the historical energy consumption required for the historical mission increases.

93. The apparatus according to claim 86, wherein the historical motion data is obtained by:
in response to the existence of a referenceable historical mission, using the motion data of the referenceable historical mission as the historical motion data, wherein: the model of the movable platform that executes the referenceable historical mission is consistent with the model of the movable platform that executes the current mission, and the motion route of the referenceable historical mission is consistent with the motion route of the current mission.

94. The apparatus according to claim 86, wherein the historical motion data is obtained by:
in response to the absence of a referenceable historical mission, controlling the movable platform to pre-move according to the route of the current mission to obtain the historical motion data, wherein: the model of the movable platform that executes the referenceable historical mission is consistent with the model of the movable platform that executes the current mission, and the motion route of the referenceable historical mission is consistent with the motion route of the current mission.

95. The apparatus according to any one of claims 86 to 94, wherein the processor is further configured to perform:
after the movable platform starts to execute the current mission, obtaining the current mission parameter(s) in real time, and, in response to the determination result being that the movable platform cannot reach the destination, determining whether the movable platform is able to reach any preset alternate landing point.

96. The apparatus according to claim 95, wherein the processor is further configured to perform:
before starting to execute the current mission, obtaining the current mission parameter(s); and
when the judgment result is that the movable platform is able to reach the destination, controlling the movable platform to execute the current mission; otherwise, issuing an alarm message or suspending the current mission.

97. The apparatus according to claim 96, wherein the processor is further configured to perform:
determining whether the state parameter(s) and/or motion environment parameter(s) of the movable platform meet start-up conditions; and
if not, issuing a warning message or suspending the current mission.

98. The apparatus according to claim 97, wherein the processor is further configured to perform:
in response to the state parameter(s) and/or motion environment parameter(s) of the movable platform meeting the start-up conditions, performing the operation to obtain current motion parameter(s) and determine whether the movable platform is able to reach the destination of the current mission based on the current mission parameter(s), the historical motion data and the remaining power energy of the movable platform.

99. The apparatus according to claim 97, wherein the start-up conditions are adjusted in real time based on one or more of parameters including: the state parameter(s) of the movable platform, the motion route parameter(s) of the mission, a load weight carried by the movable platform, and/or motion environment parameter(s).

100. The apparatus according to claim 99, wherein the state parameter(s) of the movable platform include one or more of: the motion power of the movable platform, the deviation between the center of gravity of the load carried by the movable platform and the center of gravity of the movable platform, the vibration energy of the movable platform, or the state parameter(s) of the movable platform's motor; and the motion environment parameter(s) include the wind speed of the current motion environment.

101. A computer-readable storage medium, storing a computer program, wherein when the computer program is executed, the method according to any one of claims 1 to 50 is implemented.
